# EUROPEAN PATENT APPLICATION

(11) **EP 4 835 019 A1**
(43) Date of publication of application: **04.11.2026**
(21) Application number: 26173529.4
(22) Date of filing: 21.04.2026
(51) Int. Cl.: C09D 11/328, C09D 11/08, C09D 11/14, C09D 11/38

(54) **INKJET INK FOR TABLET AND TABLET PRINTED MATTER**

(30) Priority: 28.04.2025 JP 2025074737
(71) Applicant: Toppan Holdings Inc., Tokyo 110-0016 (JP)
(72) Inventor: SANPEI, Misa, Tokyo, 110-0016 (JP); HOSHINO, Yuichi, Tokyo, 110-0016 (JP); KOSEKI, Seiya, Tokyo, 110-0016 (JP); MIYAZAWA, Yasuhisa, Tokyo, 110-0016 (JP); TANIOKA, Takumi, Tokyo, 110-0016 (JP); TANAKA, Nanae, Tokyo, 110-0016 (JP)
(74) Representative: Hasegawa, Kan

(57) **Abstract**

[Problem] An object of the present disclosure is to provide an inkjet ink for tablets that is excellent in print quality (in particular, intermittent printing resumability), light resistance and moisture resistance not only when used for neutral tablets and acidic tablets but also when used for alkaline tablets, and to provide a printed tablet including a printed portion printed with the inkjet ink.

[Solution] An inkjet ink for tablets according to the present embodiment contains an edible dye, an anti-fading agent, a binder resin, and water and ethanol as a solvent, wherein the binder resin is shellac.

## Description

### Technical Field

The present disclosure relates to an inkjet ink for tablets and to a printed tablet.

### Background Art

Among inkjet inks for tablets, which are inkjet inks for printing on tablets (hereinafter also referred to simply as "inkjet ink"), there are inks that are edible by using a food dye as the colorant (see, for example, Patent Literature 1). Tablets that are the printing object can be classified, depending on their pH value, into neutral tablets, acidic tablets and alkaline tablets. Here, a "neutral tablet" means a tablet formed of a neutral raw material, or a tablet whose printing surface is neutral because the surface of the tablet is coated with a neutral component. An "acidic tablet" means a tablet formed of an acidic raw material, or a tablet whose printing surface is acidic because the surface of the tablet is coated with an acidic component. An "alkaline tablet" means a tablet formed of an alkaline raw material, or a tablet whose printing surface is alkaline because the surface of the tablet is coated with an alkaline component.

According to the prior art, some inkjet inks that contain a dye such as Food Blue No. 1 contain reduced isomaltulose, which has a relatively low solubility in ethanol, as an additive (that is, an anti-fading agent) for improving light resistance. However, an inkjet ink that contains reduced isomaltulose, while being excellent in moisture resistance with respect to neutral tablets and acidic tablets, was in some cases inferior in moisture resistance with respect to alkaline tablets.

Further, according to the prior art, some inkjet inks have shellac added thereto with the intention of improving moisture resistance (in particular, moisture resistance with respect to alkaline tablets). Since shellac tends to have a relatively low solubility in water, an inkjet ink containing shellac tends to have a larger content of ethanol than an inkjet ink not containing shellac, in order to reduce precipitation of the shellac. Therefore, an inkjet ink containing shellac, while being excellent in moisture resistance (in particular, moisture resistance with respect to alkaline tablets), was in some cases inferior in print quality such as intermittent printing resumability.

### Citation List

### Patent Literature

[Patent Literature 1] Japanese Patent No. 6389506

### Summary of Invention

### Technical Problem

As described above, among the inkjet inks according to the prior art, few were excellent in print quality (in particular, intermittent printing resumability), light resistance and moisture resistance with respect to all of the kinds of tablets, namely neutral tablets, acidic tablets and alkaline tablets. The present inventors found that, in order to improve the above-described performance of an inkjet ink, it is necessary to add ethanol, an anti-fading agent and shellac to the inkjet ink.

The present disclosure has been made in view of the above points, and an object thereof is to provide an inkjet ink for tablets that is excellent in print quality (in particular, intermittent printing resumability), light resistance and moisture resistance with respect to all of the kinds of tablets, namely neutral tablets, acidic tablets and alkaline tablets, and to provide a printed tablet including a printed portion printed with said inkjet ink for tablets. More specifically, an object of the present disclosure is to provide an inkjet ink for tablets that is excellent in print quality (in particular, intermittent printing resumability), light resistance and moisture resistance not only when used for neutral tablets and acidic tablets but also when used for alkaline tablets, and to provide a printed tablet including a printed portion printed with said inkjet ink for tablets.

### Solution to Problem

In order to achieve the above object, an inkjet ink for tablets according to one aspect of the present disclosure contains an edible dye, an anti-fading agent, a binder resin, and water and ethanol as a solvent, wherein the binder resin is shellac.

Further, in order to achieve the above object, an inkjet ink for tablets according to one aspect of the present disclosure contains an edible dye, reduced isomaltulose as an anti-fading agent, shellac as a binder resin, and water and ethanol as a solvent, wherein the content of the ethanol, with respect to the total mass of the inkjet ink for tablets, is in a range of 1.0 mass% or more and 10.0 mass% or less, the inkjet ink for tablets further contains sodium carbonate as a pH adjuster, and the inkjet ink for tablets as a whole is alkaline.

Further, in order to achieve the above object, an inkjet ink for tablets according to one aspect of the present disclosure is an inkjet ink for tablets for printing on a magnesium oxide tablet containing magnesium oxide in a range of 0.2 g or more and 0.5 g or less per tablet, the inkjet ink for tablets containing an edible dye, reduced isomaltulose as an anti-fading agent, shellac as a binder resin, and water and ethanol as a solvent, wherein the inkjet ink for tablets contains, as the dye, only Food Blue No. 1, or only Food Yellow No. 4 and Food Red No. 106; the content of the Food Blue No. 1, with respect to the total mass of the inkjet ink for tablets, is in a range of 0.5 mass% or more and 5.0 mass% or less; the content of the Food Yellow No. 4, with respect to the total mass of the inkjet ink for tablets, is in a range of 0.25 mass% or more and 2.0 mass% or less, and the content of the Food Red No. 106, with respect to the total mass of the inkjet ink for tablets, is in a range of 0.25 mass% or more and 3.0 mass% or less; the content of the reduced isomaltulose, with respect to the total mass of the inkjet ink for tablets, is in a range of 1.0 mass% or more and 10.0 mass% or less; the content of the shellac, with respect to the total mass of the inkjet ink for tablets, is in a range of 1.0 mass% or more and 5.0 mass% or less; the content of the ethanol, with respect to the total mass of the inkjet ink for tablets, is in a range of 1.0 mass% or more and 10.0 mass% or less; and the inkjet ink for tablets as a whole is alkaline.

Further, in order to achieve the above object, a printed tablet according to one aspect of the present disclosure includes a printed portion printed using the above inkjet ink for tablets.

### Advantageous Effects of Invention

According to one aspect of the present disclosure, the print quality (in particular, intermittent printing resumability), light resistance and moisture resistance can be made excellent with respect to all of the kinds of tablets, namely neutral tablets, acidic tablets and alkaline tablets. That is, according to one aspect of the present disclosure, it is possible to provide an inkjet ink for tablets that is excellent in print quality (in particular, intermittent printing resumability), light resistance and moisture resistance not only when used for neutral tablets and acidic tablets but also when used for alkaline tablets, and to provide a printed tablet including a printed portion printed with said inkjet ink for tablets.

### Brief Description of Drawings

[Fig. 1] Fig. 1 is a conceptual diagram illustrating the penetrability and light resistance of an inkjet ink according to an embodiment of the present disclosure.
[Fig. 2] Fig. 2 is a schematic cross-sectional view showing an example of a tablet (uncoated tablet) according to an embodiment of the present disclosure.
[Fig. 3] Fig. 3 is a schematic cross-sectional view showing an example of a tablet (film-coated tablet) according to an embodiment of the present disclosure.
[Fig. 4] Fig. 4 is an example of a printed image of a tablet (uncoated tablet) according to an embodiment of the present disclosure.
[Fig. 5] Fig. 5 is an example of a printed image of a tablet (film-coated tablet) according to an embodiment of the present disclosure.

### Description of Embodiments

With the inkjet ink according to an embodiment of the present disclosure (hereinafter referred to as "the present embodiment"), excellent print quality (in particular, intermittent printing resumability), light resistance and moisture resistance are obtained even when the inkjet ink is used for any of the kinds of tablets, namely neutral tablets, acidic tablets and alkaline tablets. That is, with the inkjet ink according to the present embodiment, not only printing on a neutral tablet whose surface is neutral and printing on an acidic tablet whose surface is acidic, but also even when printing is performed on an alkaline tablet whose surface is alkaline, a decrease in print quality (in particular, intermittent printing resumability), light resistance and moisture resistance can be effectively reduced. Hereinafter, the configuration of the inkjet ink (inkjet ink for tablets) according to the present embodiment and of a tablet (printed tablet) including a printed portion printed using the inkjet ink will be described in detail.

### Composition of the Inkjet Ink

The inkjet ink according to the present embodiment contains an edible dye (food colorant), an anti-fading agent, a binder resin, and water and ethanol as a solvent. The inkjet ink according to the present embodiment also contains shellac as the binder resin. The "shellac" used in the present embodiment is a natural resin, and the properties of the shellac are as follows: specific gravity: 1.02 to 1.12; specific heat: 0.53 (0°C); softening point: 70 to 80°C (ball-and-ring method); acid value: 60 to 80; saponification value: 200 to 260; iodine value: 15 to 30 (Wijs method); thermosetting time: 2 to 6 minutes (JIS K5909, 170°C); volume resistivity: 10^15 to 10^16 Ω·cm; dielectric constant: 3.5 to 4.0; dielectric breakdown strength: 40 to 80 kV/mm; and SP value: 12.5 ± 2.0.

The components of the shellac differ depending on the purification method, the product and the like, but for example resin acids such as aleuritic acid, jalaric acid and laccijalaric acid are the main components. Examples of commercially available shellac products include products of Japan Shellac Industries, Ltd., Koyo Chemical Co., Ltd., and Gifu Shellac Manufacturing Co., Ltd. Further, the shellac in the present disclosure includes that defined as shellac in JIS K 5909 of the JIS standards and that defined as white shellac in JIS K 5911. Examples of commercially available products include B.D.S. and Lac Coat 30EA manufactured by Japan Shellac Industries, Ltd.

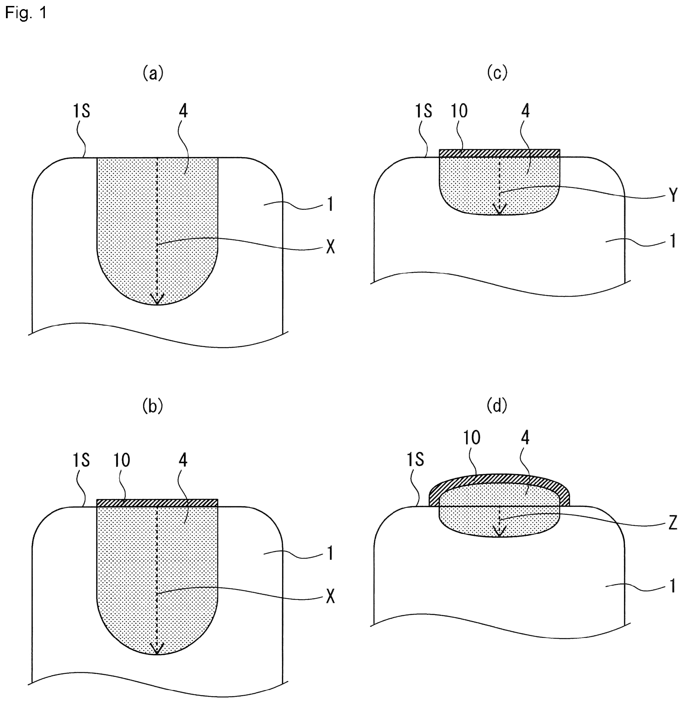

With the above-described configuration of the inkjet ink, excellent print quality (in particular, intermittent printing resumability), light resistance and moisture resistance are obtained even when the inkjet ink is used for any of the kinds of tablets, namely neutral tablets, acidic tablets and alkaline tablets. Hereinafter, the light resistance of the inkjet ink according to the present embodiment will be described with reference to Fig. 1.

Fig. 1 is a conceptual diagram for illustrating the relationship between the fixing of the ink on the surface of an object to be printed (solid preparation) and the light resistance. Here, it is assumed that, as the solid preparation, for example a tablet provided with a film-coated portion having few voids, that is, a film-coated (FC) tablet, is used. The present disclosure is not limited thereto, and an uncoated tablet or a capsule tablet may be used as the object to be printed. Figs. 1(a) to 1(d) are each a schematic cross-sectional view in the thickness direction of a tablet in a state in which inkjet inks A to D, which differ from one another in composition, have been printed on the tablet (here, a film-coated tablet) and a certain period of time has elapsed. In this example, the inkjet ink A is an ink using an edible dye 4 as the colorant and using water and ethanol as the solvent. Food Blue No. 1 can be exemplified as the dye 4.

The inkjet ink B is an ink in which shellac is added as a binder resin to the inkjet ink A. The inkjet ink C is an ink in which a predetermined saccharide is added as an anti-fading agent to the inkjet ink B. Here, the saccharide added as the anti-fading agent to the inkjet ink C is, for example, lactose. The inkjet ink D is an ink in which reduced isomaltulose is added as an anti-fading agent to the inkjet ink B. That is, focusing on the binder resin and the anti-fading agent, the inkjet ink A is an inkjet ink that contains neither a binder resin nor an anti-fading agent.

The inkjet ink B is an inkjet ink that contains shellac as a binder resin and does not contain an anti-fading agent. The inkjet ink C is an inkjet ink that contains shellac as a binder resin and contains lactose, which is a disaccharide, as an anti-fading agent. The inkjet ink D is an inkjet ink that contains shellac as a binder resin and contains reduced isomaltulose as an anti-fading agent.

Specifically, Fig. 1(a) is a schematic cross-sectional view in the thickness direction of a tablet in a state in which the inkjet ink A, which contains the dye 4 as the colorant and contains water and ethanol as the solvent, has been printed on the surface 1S of a base material 1 of a tablet and a certain period of time (for example 140 hours) has elapsed. Fig. 1(b) is a schematic cross-sectional view in the thickness direction of a tablet in a state in which the inkjet ink B has been printed on the surface 1S of the base material 1 of a tablet and a certain period of time (for example 140 hours) has elapsed. Fig. 1(c) is a schematic cross-sectional view in the thickness direction of a tablet in a state in which the inkjet ink C has been printed on the surface 1S of the base material 1 of a tablet and a certain period of time (for example 140 hours) has elapsed. Fig. 1(d) is a schematic cross-sectional view in the thickness direction of a tablet in a state in which the inkjet ink D has been printed on the surface 1S of the base material 1 of a tablet and a certain period of time (for example 140 hours) has elapsed.

First, the presence or absence of addition of shellac, which is the resin binder in the inkjet ink, and the fixing property of the ink will be described taking the inkjet inks A and B as an example. By adding shellac, which is the resin binder, to the inkjet ink, a dry coating film 10 formed of the shellac, which is the resin binder, is produced on the surface of the printed ink. As a result, the dye 4 tends to remain at the surface portion of the tablet, and discoloration and fading of the printed image can be suppressed.

Next, the presence or absence of addition of a saccharide, which is the anti-fading agent in the inkjet ink, and the penetrability of the dye will be described taking the inkjet inks B and C as an example. Among various colorants used in inkjet inks, for example with a tar-based dye used as a food dye, discoloration and fading may occur in characters, images and the like printed on the surface of a solid preparation or the like. For example, with Food Blue No. 1 among the tar-based dyes, discoloration and fading of the printed image occurred due to penetration into the solid preparation over time and due to photodecomposition. In contrast, a method is known in which a saccharide, which is an anti-fading agent, is added to the inkjet ink so as to suppress penetration of the dye into the solid preparation and to suppress discoloration and fading of the printed image.

As shown in Fig. 1(b), when the inkjet ink B, which does not contain a saccharide that functions as an anti-fading agent, is printed, the dye 4 penetrates into the interior of the base material 1 of the tablet when a certain period of time has elapsed after printing. Here, let the penetration depth of the dye 4 in the inkjet ink B after the elapse of the certain period of time be the penetration depth X (µm). In contrast, as shown in Fig. 1(c), when the inkjet ink C, which contains a saccharide that functions as an anti-fading agent, is printed, the penetration depth Y (µm) of the inkjet ink C after the elapse of the certain period of time from printing is smaller than the penetration depth X of the inkjet ink B (X > Y).

In the inkjet ink C, an increase in the viscosity of the ink and the like occur due to the addition of the predetermined saccharide that functions as an anti-fading agent, and penetration of the dye 4 into the interior of the base material 1 of the tablet is suppressed. Therefore, when the inkjet ink C is printed, the dye 4 remains in the vicinity of the surface 1S within the base material 1 of the tablet even after the elapse of the certain period of time from printing. That is, an inkjet ink containing a predetermined saccharide that functions as an anti-fading agent can suppress discoloration and fading of the printed image due to penetration of the dye (for example, Food Blue No. 1), as compared with the case where no saccharide that functions as an anti-fading agent is added.

As described above, the inkjet ink according to the present embodiment, by selecting the kind and content of the anti-fading agent, binder resin and solvent to be added, fixes the ink to the surface of the object to be printed with respect to any kind of object to be printed, namely a neutral, acidic or alkaline object to be printed, sufficiently suppresses photo-discoloration and fading of the printed image, and improves the light resistance. The present inventors found that, in order to suppress photo-discoloration and fading of the printed image, it is effective to fix the ink onto the surface of the object to be printed (for example a tablet). In this example, by fixing the ink onto the surface 1S of the tablet, the dye 4 is fixed onto the surface 1S, and as a result the dye 4 can remain at a high concentration on the surface 1S.

When the concentration of the dye 4 is high on the surface 1S of the base material 1 of the tablet, for example the proportion of the colorant that undergoes photo-discoloration and fading due to photodecomposition among the dye 4 on the surface 1S is reduced. That is, even if photo-discoloration and fading occurs in a part of the dye 4, the influence thereof is limited, and a decrease in the visibility (legibility) of the printed image is suppressed. As a result, the visibility of the printed image as a whole is maintained, and consequently photo-discoloration and fading of the printed image can be sufficiently suppressed. Therefore, the light resistance of the inkjet ink can be improved. The present inventors then discovered that, even when used for any kind of object to be printed, namely a neutral, acidic or alkaline object to be printed, a predetermined saccharide such as lactose or reduced isomaltulose functions as a fixing agent that fixes an ink containing a dye as a colorant onto the surface of the object to be printed.

Specifically, the inkjet ink according to the present embodiment contains a food dye as the colorant, contains a saccharide that functions as an anti-fading agent, contains shellac as the binder resin, and contains water and ethanol that function as the solvent. With such a configuration, even when used for any of the kinds of tablets, namely neutral tablets, acidic tablets and alkaline tablets, an ink containing the dye used as the colorant can be fixed to the surface of the object to be printed, and the dye can remain at a high concentration on the surface. As a result, the inkjet ink according to the present embodiment can sufficiently suppress photo-discoloration and fading of the printed image and can improve the light resistance.

As shown in Fig. 1(d), when the inkjet ink D, which is a more preferable form among the inkjet inks according to the present embodiment, is printed on the surface 1S of the base material 1 of a tablet, the dye 4 (here, Food Blue No. 1) in the ink is fixed to the surface 1S. Specifically, when the inkjet ink D is printed, the penetration depth Z (µm) of the dye 4 after the elapse of the certain period of time from printing is further reduced as compared with the penetration depth Y of the dye 4 in the inkjet ink C containing the predetermined saccharide (Y > Z). For example, the penetration depth Z of the dye 4 in the inkjet ink D is reduced to about 50% of the penetration depth Y of the dye 4 in the inkjet ink C. That is, the inkjet ink D can further suppress penetration of the dye 4. Therefore, the dye 4 remains at a high concentration on the surface 1S, and a decrease in the visibility of the printed image is suppressed as described above. As a result, even when the inkjet ink D is used for any of the kinds of tablets, namely neutral tablets, acidic tablets and alkaline tablets, photo-discoloration and fading of the printed image is sufficiently suppressed, and the inkjet ink D can improve the light resistance.

On the other hand, although the inkjet ink C can cause the dye 4 to remain in the vicinity of the surface 1S within the base material 1 of the tablet, suppression of penetration of the dye 4 is not as sufficient as in the inkjet ink D, and the ink cannot be fixed onto the surface 1S. That is, in the inkjet ink C, since the concentration of the dye 4 remaining on the surface 1S is low, photo-discoloration and fading of the printed image cannot be suppressed as well as in the inkjet ink D, and the inkjet ink C tends to be inferior to the inkjet ink D in that the light resistance is less likely to be improved (enhanced).

As described above, the inkjet ink according to the present embodiment, by adding a predetermined saccharide (for example, lactose or reduced isomaltulose) as an anti-fading agent, greatly suppresses penetration of the dye into the interior of the object to be printed and fixes the ink to the surface of the object to be printed, even when used for any of the kinds of tablets, namely neutral tablets, acidic tablets and alkaline tablets. As a result, the inkjet ink according to the present embodiment can suppress photo-discoloration and fading of the printed image and improve the light resistance, and furthermore can also suppress discoloration and fading of the printed image due to penetration of the dye into the interior of the object to be printed.

Further, as shown in Fig. 1(d), the inkjet ink D can be fixed onto the surface 1S of the base material 1 of the tablet so as to slightly bulge. As a result, for example when the inkjet ink D is printed, the printing is recognized as being darkly raised on the surface 1S. Therefore, for example as compared with the inkjet inks A, B and C, the inkjet ink D can improve the visibility of the printed image at the time of printing. That is, with the inkjet ink according to the present embodiment, in addition to reducing a decrease in visibility due to photo-discoloration and fading of the printed image, good visibility can be imparted to the printed image at the time of printing.

Hereinafter, the details of the light resistance of the inkjet ink according to the present embodiment will be described. It suffices that the inkjet ink according to the present embodiment has a color difference ΔE according to JIS Z 8781 of 20 or less before and after a light resistance test. Here, the light resistance test is, for example, a test in which the color difference ΔE (conforming to JIS Z 8781), which indicates the amount of change in chromaticity and optical color density before and after irradiation with visible light, is compared for a printed image printed using the inkjet ink according to the present embodiment. Specifically, the color difference ΔE is measured before and after the printed image is irradiated with a cumulative 1.2 million lux of visible light, and the values are compared. For irradiation with visible light, for example a xenon weather meter (Toyo Seiki Seisaku-sho, Ci4000) is used. The printed image in the light resistance test is, for example, one that has been solid-printed on a tablet (for example a film-coated tablet) that is the printing object.

The light resistance necessary and sufficient for forming a printed image on a pharmaceutical tablet or the like often refers to a color difference ΔE of the printed image before and after irradiation of 20 or less in a light resistance test in which 1.2 million lux of visible light is applied. Setting a color difference ΔE of 20 or less as the criterion for judging sufficient light resistance was derived by the present inventors as a result of an opinion test carried out together with various medical personnel, and when the color difference ΔE exceeds 20, it begins to be recognized that the visibility (for example, the legibility of the printing) of the printed image is decreased. That is, if the color difference ΔE before and after irradiation with visible light is 20 or less, it can be said that the inkjet ink is one in which photo-discoloration and fading is sufficiently suppressed and which is excellent in light resistance. Although this is a somewhat larger figure than 3 to 6, which is a guideline for the color difference ΔE in general commercial printed matter, this figure could be obtained because there is usually no comparison of a tablet before and after exposure and it is assumed that the printed image on the tablet surface naturally fades.

As a preferable form of the inkjet ink according to the present embodiment, the reason for using a saccharide such as lactose or reduced isomaltulose as the fixing agent (anti-fading agent) is that, when a fixing agent other than a saccharide such as lactose or reduced isomaltulose is added, the dye on the tablet surface is not sufficiently fixed to the surface of the object to be printed, and when the above light resistance test is carried out on a solid printed image, the color difference ΔE may exceed 20. By adding a saccharide such as lactose or reduced isomaltulose as the fixing agent, the dye on the tablet surface is sufficiently fixed to the surface of the object to be printed, whereby the color difference ΔE becomes less than 20 before and after the light resistance test, and excellent light resistance is imparted to the inkjet ink.

Hereinafter, the respective components constituting the inkjet ink according to the present embodiment will be described.

### (Colorant)

As described above, the inkjet ink according to the present embodiment contains a food dye (edible dye). In the inkjet ink according to the present embodiment, it is preferable that the content of the food dye is in a range of 0.5 mass% or more and 5.0 mass% or less with respect to the total mass of the ink. With such a configuration, good visibility can be imparted to the printed image, and a high intermittent printing resumability (that is, excellent print quality) can be imparted. Further, if the content of the food dye is within the above range, the food dye can be reliably caused to remain at a high concentration on the surface of the printed matter by the addition of the fixing agent that functions as an anti-fading agent, photo-discoloration and fading in the printed image can be suppressed, and the light resistance of the inkjet ink according to the present embodiment can be improved.

In contrast, if the content of the food dye is less than 0.5 mass%, the printed color as a whole becomes thin and the visibility of the printed image tends to decrease. Furthermore, if the content of the food dye is less than 0.5 mass%, the light resistance decreases, or light resistance may not be exhibited. Further, if the content of the food dye exceeds 5.0 mass%, the dye in the ink may precipitate or settle as a solid due to deterioration of the dissolution stability of the colorant, which causes clogging of the nozzles of the inkjet head during printing, and so-called print quality (in particular, intermittent printing resumability) may decrease. The lower limit of the content of the food dye is more preferably 0.8 mass% or more and still more preferably 1.0 mass% or more with respect to the total mass of the ink. The upper limit of the content of the food dye is more preferably 4.0 mass% or less and still more preferably 3.0 mass% or less with respect to the total mass of the ink.

Further, it is preferable that the inkjet ink according to the present embodiment contains, as the food dye, at least one selected from, for example, azo dyes, triphenylmethane dyes and xanthene dyes. Examples of the azo dye include at least one of Food Red No. 102 (New Coccine, CAS No.: 2611-82-7, E number: E124) and Food Yellow No. 4 (Tartrazine, CAS No.: 1934-21-0, E number: E102). An example of the triphenylmethane dye is Food Blue No. 1 (Brilliant Blue FCF, CAS No.: 3844-45-9, E number: E133). An example of the xanthene dye is Food Red No. 106 (Acid Red 52, CAS No.: 3520-42-1).

Further, the inkjet ink according to the present embodiment may be in a form containing only Food Blue No. 1 as the food dye, or may be in a form containing only Food Yellow No. 4 and Food Red No. 106. In the form containing only Food Blue No. 1 as the food dye, it is preferable that the content of the Food Blue No. 1, with respect to the total mass of the inkjet ink for tablets, is in a range of 0.5 mass% or more and 5.0 mass% or less. In the form containing only Food Yellow No. 4 and Food Red No. 106 as the food dye, it is preferable that the content of the Food Yellow No. 4, with respect to the total mass of the inkjet ink for tablets, is in a range of 0.25 mass% or more and 2.0 mass% or less, and the content of the Food Red No. 106, with respect to the total mass of the inkjet ink for tablets, is in a range of 0.25 mass% or more and 3.0 mass% or less. The colorant that can be added to the inkjet ink according to the present embodiment is not limited to the food dyes described above. To the inkjet ink according to the present embodiment, for example, a conventionally known synthetic food colorant or natural food colorant can also be appropriately selected and added.

Examples of the synthetic food colorant include tar-based dyes, natural pigment derivatives and natural synthetic pigments. Examples of the tar-based dye include Food Blue No. 1, Food Red No. 2, Food Red No. 3, Food Red No. 40, Food Red No. 102, Food Red No. 104, Food Red No. 105, Food Red No. 106, Food Yellow No. 4, Food Yellow No. 5, Food Blue No. 2, Food Red No. 2 aluminum lake, Food Red No. 3 aluminum lake, Food Red No. 40 aluminum lake, Food Yellow No. 4 aluminum lake, Food Yellow No. 5 aluminum lake, Food Blue No. 1 aluminum lake and Food Blue No. 2 aluminum lake. An example of the natural pigment derivative is potassium norbixin. Examples of the natural synthetic pigment include β-carotene and riboflavin.

Examples of the natural food colorant include anthocyanin pigments, carotenoid pigments, quinone pigments, chlorophyll pigments, flavonoid pigments, betaine pigments, monascus pigments, and other pigments originating from natural products. Examples of the anthocyanin pigment include red radish pigment, red cabbage pigment, red rice pigment, elderberry pigment, cowberry pigment, gooseberry pigment, cranberry pigment, salmonberry pigment, perilla pigment, swamp blueberry pigment, strawberry pigment, dark sweet cherry pigment, cherry pigment, hibiscus pigment, huckleberry pigment, grape juice pigment, grape skin pigment, blackcurrant pigment, blackberry pigment, blueberry pigment, plum pigment, whortleberry pigment, boysenberry pigment, mulberry pigment, purple sweet potato pigment, purple corn pigment, purple yam pigment, raspberry pigment, redcurrant pigment, loganberry pigment, and other anthocyanin pigments. Examples of the carotenoid pigment include annatto pigment, gardenia yellow pigment, and other carotenoid pigments. Examples of the quinone pigment include cochineal pigment, gromwell (shikon) pigment, lac pigment, and other quinone pigments. Examples of the flavonoid pigment include safflower yellow pigment, kaoliang pigment, onion pigment, and other flavonoid pigments. An example of the betaine pigment is beet red pigment. Examples of the monascus pigment include monascus pigment (beni-koji pigment) and monascus yellow pigment. Examples of other pigments originating from natural products include turmeric pigment, clerodendron (kusagi) pigment, gardenia red pigment, and spirulina blue pigment.

(Fixing Agent) As described above, the inkjet ink according to the present embodiment contains a fixing agent for fixing an ink containing a food dye to the surface of an object to be printed. In the inkjet ink according to the present embodiment, this fixing agent plays the role of an anti-fading agent. Specifically, the fixing agent contained in the inkjet ink according to the present embodiment is, for example, a saccharide, more preferably a disaccharide, still more preferably lactose or reduced isomaltulose, and most preferably reduced isomaltulose. If the fixing agent is a saccharide such as reduced isomaltulose, an ink containing a food dye can be fixed to the surface of an object to be printed by adding it to the inkjet ink together with a solvent having the component configuration described below. As a result, the inkjet ink according to the present embodiment can sufficiently suppress photo-discoloration and fading of the printed image and improve the light resistance with respect to all of the kinds of tablets, namely neutral tablets, acidic tablets and alkaline tablets. Further, the saccharide such as reduced isomaltulose used as the fixing agent in the present embodiment also has a function of suppressing decomposition (photodecomposition) of the inkjet ink due to light irradiation. Therefore, the occurrence of photo-discoloration and fading itself can also be suppressed. It is preferable that the content of the saccharide such as reduced isomaltulose, which is the fixing agent, in the inkjet ink according to the present embodiment, that is, the content (mass) of the anti-fading agent, is in a range of 1.0 mass% or more and 10.0 mass% or less with respect to the total mass of the ink.

If the content of the anti-fading agent is less than 1.0 mass% with respect to the total mass of the ink, the fixing effect of the ink may decrease. Therefore, if the content of the anti-fading agent is less than 1.0 mass% with respect to the total mass of the ink, the light resistance decreases, or light resistance may not be exhibited. Further, if the content of the anti-fading agent exceeds 10.0 mass% with respect to the total mass of the ink, the anti-fading agent in the ink may precipitate or settle as a solid due to an increase in the viscosity of the ink and deterioration of the dissolution stability of the anti-fading agent, which causes clogging of the nozzles of the inkjet head during printing, and the intermittent printing resumability may decrease. The lower limit of the content of the anti-fading agent is more preferably 3.0 mass% or more and still more preferably 5.0 mass% or more with respect to the total mass of the ink. The upper limit of the content of the anti-fading agent is more preferably 8.0 mass% or less and still more preferably 7.0 mass% or less with respect to the total mass of the ink.

(Solvent) The inkjet ink according to the present embodiment contains, in addition to the food dye and the anti-fading agent, a solvent (dispersion medium) for dissolving (dispersing) the food dye and the anti-fading agent. The inkjet ink according to the present embodiment contains, as the solvent, water (for example purified water) and ethanol. In general, an anti-fading agent, in particular a disaccharide such as reduced isomaltulose, has a property of being difficult to dissolve in alcohols. Therefore, in the present embodiment, by including ethanol in the solvent, the solubility of the anti-fading agent used as the fixing agent in the solvent decreases. Accordingly, in the present embodiment, by adding to the inkjet ink a solvent containing the above alcohol (in particular, ethanol) together with the anti-fading agent as the fixing agent, the fixing effect of the ink is reliably exhibited, and the food dye contained in the ink can be caused to remain at a higher concentration on the surface of the object to be printed (for example a tablet). As a result, the inkjet ink according to the present embodiment can sufficiently suppress photo-discoloration and fading of the printed image and improve the light resistance. Further, since ethanol has high volatility, the transfer resistance (drying property) of the inkjet ink can be improved.

In the inkjet ink according to the present embodiment, the content of each component of the solvent is not limited, but it is preferable that the content of the ethanol is in a range of 1.0 mass% or more and 10.0 mass% or less with respect to the total mass of the ink. With such a configuration, the solubility of the anti-fading agent in the solvent reliably decreases, and the fixing effect of the ink containing the food dye is further improved. Therefore, more excellent light resistance can be imparted to the inkjet ink.

If the content of the ethanol is less than 1.0 mass%, the effect of reducing the solubility of the anti-fading agent in the solvent may decrease. Further, if the content of the ethanol exceeds 10.0 mass%, drying of the ink occurs at the inkjet nozzle, which causes clogging of the nozzles of the inkjet head during printing, and the intermittent printing resumability may decrease. In addition, if the content of the ethanol exceeds 10.0 mass%, the solubility of the anti-fading agent in the solvent further decreases (that is, the anti-fading agent becomes less likely to dissolve in the solvent), whereby the anti-fading agent precipitates, and as a result the fixing effect of the ink decreases and the light resistance performance may decrease. Further, the precipitated anti-fading agent causes clogging of the nozzles of the inkjet head, and the intermittent printing resumability may decrease. The lower limit of the content of the ethanol is more preferably 2.5 mass% or more and still more preferably 4.0 mass% or more with respect to the total mass of the ink. The upper limit of the content of the ethanol is more preferably 8.0 mass% or less and still more preferably 7.0 mass% or less with respect to the total mass of the ink.

Further, the inkjet ink according to the present embodiment may contain propylene glycol as the solvent. Propylene glycol functions as a humectant, prevents drying of the ink at the inkjet nozzle, and can impart sufficient intermittent printing resumability to the ink. When propylene glycol is contained in the solvent, it is preferable that the content of the propylene glycol is in a range of 28.0 mass% or less with respect to the total mass of the ink. With such a configuration, printing can be performed without impairing the drying property of the ink, and the fixing effect of the ink containing the food dye is further improved. Therefore, more excellent light resistance can be imparted to the inkjet ink.

If the content of the propylene glycol exceeds 28.0 mass%, the delay in drying of the printed surface on the tablet surface increases, which may cause a defect (transfer failure) such that, when printed tablets come into contact with each other, undried ink adheres to the other tablet and becomes a stain. Further, when the inkjet ink according to the present embodiment contains propylene glycol as the solvent, it is preferable that the content of the propylene glycol is larger than the content of the ethanol as the solvent.

Further, the inkjet ink according to the present embodiment may further contain, as the solvent, at least one of glycerin and isopropyl alcohol. Specifically, the solvent may further contain either one of glycerin and isopropyl alcohol, or may further contain both glycerin and isopropyl alcohol. Glycerin functions as a humectant, similarly to the propylene glycol described above. Further, since isopropyl alcohol has high volatility similarly to the ethanol described above, the transfer resistance (drying property) of the inkjet ink can be improved.

(Binder Resin) The inkjet ink according to the present embodiment contains a binder resin in addition to the food dye, the anti-fading agent and the solvent. The inkjet ink according to the present embodiment contains shellac as the binder resin. As described above, the "shellac" used in the present embodiment is a natural resin, and the properties of the shellac are as follows: specific gravity: 1.02 to 1.12; specific heat: 0.53 (0°C); softening point: 70 to 80°C (ball-and-ring method); acid value: 60 to 80; saponification value: 200 to 260; iodine value: 15 to 30 (Wijs method); thermosetting time: 2 to 6 minutes (JIS K5909, 170°C); volume resistivity: 10^15 to 10^16 Ω·cm; dielectric constant: 3.5 to 4.0; dielectric breakdown strength: 40 to 80 kV/mm; and SP value: 12.5 ± 2.0.

The components of the shellac differ depending on the purification method, the product and the like, but for example resin acids such as aleuritic acid, jalaric acid and laccijalaric acid are the main components. More specifically, the shellac according to the present embodiment may be any one of aleuritic acid, jalaric acid and laccijalaric acid, or may be one in which aleuritic acid and jalaric acid or laccijalaric acid are ester-bonded. In the case of one in which aleuritic acid and jalaric acid or laccijalaric acid are ester-bonded, a hard resin having 1 to 4 ester bonds in the molecule is preferable. Examples of commercially available shellac products include products of Japan Shellac Industries, Ltd., Koyo Chemical Co., Ltd., and Gifu Shellac Manufacturing Co., Ltd. Further, the shellac in the present disclosure includes that defined as shellac in JIS K 5909 of the JIS standards and that defined as white shellac in JIS K 5911. Examples of commercially available products include B.D.S. and Lac Coat 30EA manufactured by Japan Shellac Industries, Ltd.

In the inkjet ink according to the present embodiment, the content of the binder resin is not limited, but it is preferable that the content of the binder resin is in a range of 1.0 mass% or more and 5.0 mass% or less with respect to the total mass of the ink. With such a configuration, excellent moisture resistance is obtained not only when used for neutral tablets and acidic tablets but also when used for alkaline tablets. If the content of the binder resin is less than 1.0 mass%, the moisture resistance with respect to alkaline tablets may decrease. Further, if the content of the binder resin exceeds 5.0 mass%, the content of the other components relatively decreases, and functions such as light resistance may decrease. In addition, the printability (in particular, intermittent printing resumability) may deteriorate due to an increase in the viscosity of the ink.

When focusing on moisture resistance, the content of the binder resin is more preferably 2.0 mass% or more and still more preferably 4.0 mass% or more with respect to the total mass of the ink. When focusing on moisture resistance, it is preferable that the content of the binder resin is 5.0 mass% or less with respect to the total mass of the ink. When focusing on print stability, the content of the binder resin is more preferably 4.0 mass% or less and still more preferably 3.0 mass% or less with respect to the total mass of the ink. When focusing on print stability, it is preferable that the content of the binder resin is 1.0 mass% or more with respect to the total mass of the ink.

(pH Adjuster) It is known that shellac dissolves not only in alcohols but also in an alkaline aqueous solution. Therefore, by making the ink alkaline, shellac can be maintained in a dissolved state without precipitation even with a solvent having a small amount of alcohol (that is, an ink having a small content of alcohol). Thus, when shellac, which has a high solubility in alcohols, is added to (dissolved in) an inkjet ink containing reduced isomaltulose, which has a low solubility in alcohols, shellac and reduced isomaltulose can be made to coexist by adding a pH adjuster or the like to the inkjet ink to appropriately adjust the pH of the inkjet ink. The pH adjuster that can be added to the inkjet ink according to the present embodiment is, for example, sodium carbonate.

In the inkjet ink according to the present embodiment, the content of the pH adjuster is not limited, but it is preferable that the content of the pH adjuster is in a range of 0.1 mass% or more and 0.6 mass% or less with respect to the total mass of the ink. With such a configuration, excellent moisture resistance is obtained not only when used for neutral tablets and acidic tablets but also when used for alkaline tablets. If the content of the pH adjuster is less than 0.1 mass%, the solubility of the binder resin decreases, and the moisture resistance with respect to alkaline tablets may decrease. Further, if the content of the pH adjuster exceeds 0.6 mass%, the ink itself becomes strongly alkaline, and functions such as light resistance for neutral tablets and acidic tablets may decrease. The lower limit of the content of the pH adjuster is more preferably 0.2 mass% or more and still more preferably 0.3 mass% or more with respect to the total mass of the ink. The upper limit of the content of the pH adjuster is more preferably 0.5 mass% or less and still more preferably 0.4 mass% or less with respect to the total mass of the ink.

Further, it is preferable that the inkjet ink according to the present embodiment is alkaline as a whole, and the pH value of the inkjet ink can be appropriately adjusted by adjusting the content of the pH adjuster. It is preferable that the pH value of the inkjet ink according to the present embodiment is in a range of 7.5 or more and 9.5 or less. With such a configuration, excellent moisture resistance is obtained not only when used for neutral tablets and acidic tablets but also when used for alkaline tablets. The lower limit of the pH value of the inkjet ink is more preferably 8.0 or more and still more preferably 8.3 or more. The upper limit of the pH value of the inkjet ink is more preferably 9.0 or less and still more preferably 8.8 or less.

Further, it is preferable that the pH value of the inkjet ink according to the present embodiment is set so that the absolute value of the difference from the pH value at the printing location of the tablet that is the printing object is within 2, more preferably set so as to be within 1.8, and still more preferably set so as to be within 1.5. For example, when the pH value of the inkjet ink according to the present embodiment is set to "7.5", it is preferable that the pH value at the printing location of the tablet that is the printing object is in a range of "5.5 or more and 9.5 or less". Further, when the pH value of the inkjet ink according to the present embodiment is set to "9.5", it is preferable that the pH value at the printing location of the tablet that is the printing object is in a range of "7.5 or more and 11.5 or less".

By adding a binder resin to the ink, adhesion of the ink to the tablet and adhesiveness for increasing the strength of the ink after printing are imparted, and moisture resistance can be given to the tablet after printing. By using an alkali-treated binder resin, the inkjet ink itself also tends to be alkaline, so that even when printing is performed on the printing surface of an alkaline tablet, the performance of the ink does not change due to a difference in pH, and an effect of improving moisture resistance can be imparted. The pH value of the inkjet ink according to the present embodiment may be, for example, a value obtained by measurement with a pH meter using the glass electrode method according to a known technique. Further, the pH value at the printing location of the tablet that is the printing object according to the embodiment may be, for example, a value obtained by simple measurement by dropping a pH indicator such as a phenolphthalein solution, a bromophenol blue solution or a methyl orange solution onto the printing location of the tablet.

(Internally Added Resin) The inkjet ink according to the present embodiment may contain an internally added resin in addition to the colorant and solvent described above. The internally added resin that can be added to the inkjet ink according to the present embodiment may be any resin-like substance that is edible and is a water-soluble powder, paste or flake and that can form a film on the tablet surface by drying after printing. Examples of the internally added resin include polyvinyl alcohol (PVA), hydroxypropyl cellulose (HPC), hydroxypropyl methylcellulose (HPMC), polyvinylpyrrolidone (PVP), high-molecular-weight polyethylene glycol (PEG) such as polyethylene glycol 4000/polyethylene glycol 1540, methacrylic acid copolymer (product name: Eudragit S100), maltodextrin and erythritol.

(Leveling Agent) The inkjet ink according to the present embodiment may contain a leveling agent in addition to the colorant, solvent and internally added resin described above. The leveling agent that can be added to the inkjet ink according to the present embodiment may be any edible and water-soluble surfactant. Examples of the leveling agent include polyglycerin fatty acid esters (e.g., decaglyceryl distearate Q-182S manufactured by Taiyo Kagaku Co., Ltd., and decaglyceryl monolaurate Q-12S manufactured by the same company), sorbitan fatty acid esters (e.g., NIKKOL SL-10 manufactured by Nikko Chemicals Co., Ltd.), sucrose fatty acid esters (e.g., DK Ester F-110 manufactured by Daiichi Kogyo Seiyaku Co., Ltd.), and polysorbates (Emasol S-120 series manufactured by Kao Corporation).

[Printing Method] The inkjet ink according to the present embodiment is not particularly limited as to the printing method, and printing using an inkjet apparatus such as a commercially available inkjet printer is possible. Therefore, the inkjet ink according to the present embodiment has a wide range of applications and is very useful. For example, the inkjet ink according to the present embodiment can be printed by a so-called drop-on-demand type inkjet apparatus using a piezoelectric element (piezoelectric ceramic) as an actuator, and can also be printed by an inkjet apparatus of another type. Examples of the drop-on-demand type inkjet apparatus include an apparatus employing a thermal inkjet method in which the inkjet ink is ejected by the water vapor pressure generated by instantaneously raising a minute heat-generating element to a high temperature (200 to 300°C), an electrostatic type apparatus in which the inkjet ink is ejected by electrostatically vibrating an actuator, and an apparatus employing an ultrasonic method utilizing the cavitation phenomenon of ultrasonic waves. Further, if the inkjet ink according to the present embodiment has charging performance, it is also possible to use an apparatus employing a continuous (continuous jet) method.

[Tablet] In the present embodiment, the inkjet ink according to the present embodiment may be printed and imaged on the surface of any of the kinds of tablets, namely neutral tablets, acidic tablets and alkaline tablets, using the printing method described above. That is, it suffices that the tablet according to the present embodiment includes a printed portion, that is, a printed image, printed using the inkjet ink according to the present embodiment. With the inkjet ink according to the present embodiment, for example, the light resistance of a printed image applied to the surface of a pharmaceutical tablet by an inkjet printing method can be improved. Hereinafter, the configuration of a tablet including a printed image printed with the inkjet ink according to the embodiment will be described. The tablet according to the present embodiment is, for example, a pharmaceutical tablet. Here, the "pharmaceutical tablet" includes, for example, an uncoated tablet (bare tablet), a sugar-coated tablet, an enteric-coated tablet and an orally disintegrating tablet, as well as a film-coated tablet in which a water-soluble surface layer is formed on the outermost surface of the tablet.

Further, it is preferable that the tablet according to the present embodiment is an alkaline tablet at least the surface of which is alkaline, and it is still more preferable that it is a magnesium oxide tablet containing magnesium oxide at least on the surface. That is, the inkjet ink according to the present embodiment is an ink used not only for printing on neutral tablets and acidic tablets but also for printing on an alkaline tablet at least the surface of which is alkaline. Further, the tablet according to the present embodiment may be a tablet containing magnesium oxide as a main component, and it is preferable that it is a tablet containing magnesium oxide in a range of 0.2 g or more and 0.5 g or less per tablet. That is, the inkjet ink according to the present embodiment is an ink used not only for printing on neutral tablets and acidic tablets but also for printing on a tablet containing magnesium oxide in a range of 0.2 g or more and 0.5 g or less per tablet.

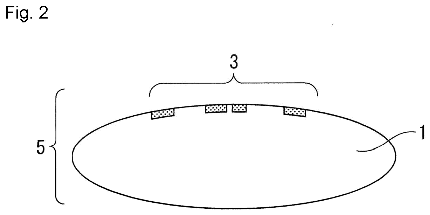

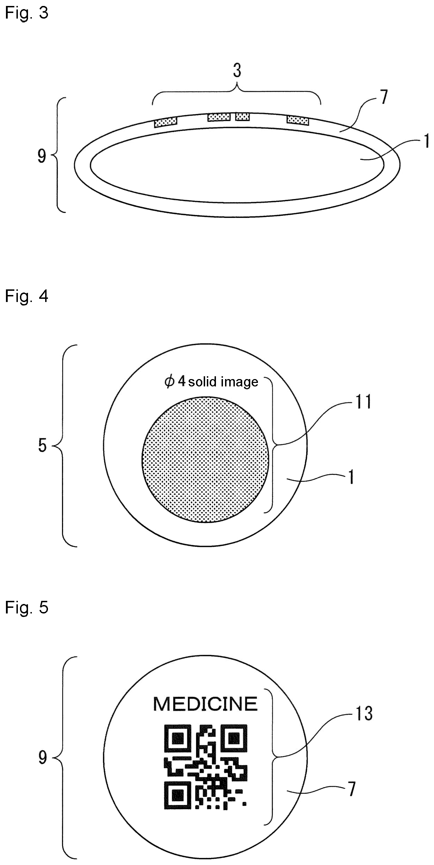

Fig. 2 is a schematic cross-sectional view showing an example of a pharmaceutical tablet (uncoated tablet) on which printing (printing and imaging) has been performed. Fig. 2 shows, in cross-sectional view, an uncoated printed tablet 5 in which a printed image 3 such as characters is printed on the upper surface of the base material 1 of a tablet. Fig. 3 is a schematic cross-sectional view showing an example of a pharmaceutical tablet (film-coated tablet) on which printing (printing and imaging) has been performed. Fig. 3 shows, in cross-sectional view, a film-coated printed tablet 9 in which a printed image 3 such as characters is printed on the upper surface of the base material 1 of a tablet on the surface of which a film-coat layer 7 is formed. In the present embodiment, as shown in Fig. 4, a solid image may be printed as an uncoated tablet printed image 11, and as shown in Fig. 5, a two-dimensional barcode may be printed as a film-coated tablet printed image 13.

The active ingredient contained in the pharmaceutical tablet is not particularly limited. For example, it includes, but is not limited to, substances effective for the prevention and treatment of various diseases (for example, substances having a sleep-inducing action, tranquilizer activity, antibacterial activity, hypotensive action, antianginal activity, analgesic action, anti-inflammatory activity, sedative action, antidiabetic activity, diuretic action, anticholinergic activity, antacid action, antiepileptic action, ACE-inhibitory activity, β-receptor antagonist or agonist activity, anesthetic action, appetite-suppressing action, antiarrhythmic action, antidepressant action, anticoagulant activity, antidiarrheal action, antihistaminic activity, antimalarial action, antitumor activity, immunosuppressive activity, antiparkinsonian action, antipsychotic action, antiplatelet activity, antihyperlipidemic action and the like), substances having a cleaning action, fragrances, and substances having a deodorizing action.

The tablet according to the present embodiment can, as necessary, contain a carrier acceptable for its use together with the active ingredient. For example, in the case of a pharmaceutical tablet, a pharmaceutically acceptable carrier can be blended. As the pharmaceutically acceptable carrier, various organic or inorganic carrier substances conventionally used as preparation materials are used, and for example an excipient, a lubricant, a binder, a disintegrant, a thickener and the like are appropriately blended in suitable amounts. As necessary, additives such as a preservative, an antioxidant, a colorant and a sweetener can also be used. In the present embodiment, a pharmaceutical tablet has been described as an example of the tablet, but the present disclosure is not limited thereto. The printing object of the inkjet ink according to the present embodiment is not particularly limited, and printing may be performed, for example, on the surface of various tablets such as tablets administered to animals other than humans (pets, livestock, poultry and the like), feed, fertilizer, detergent, and foods such as tablet confectionery such as ramune sweets and supplements. Further, the inkjet ink according to the present embodiment is also not particularly limited as to the size of the printing object, and is applicable to tablets of various sizes.

### (Effects of the Present Embodiment)

(1) The inkjet ink according to the present embodiment contains an edible dye, an anti-fading agent, a binder resin, and water and ethanol as a solvent, wherein the binder resin is shellac. With such a configuration, the ink is excellent in print quality (in particular, intermittent printing resumability), light resistance and moisture resistance not only when used for neutral tablets and acidic tablets but also, as compared with the prior art, when used for alkaline tablets.
(2) The inkjet ink according to the present embodiment may contain reduced isomaltulose as the anti-fading agent. With such a configuration, the ink is excellent in light resistance as compared with the prior art.
(3) Further, in the inkjet ink according to the present embodiment, the content of the ethanol, with respect to the total mass of the inkjet ink for tablets, may be in a range of 1.0 mass% or more and 10.0 mass% or less. With such a configuration, the ink is excellent in print quality (in particular, intermittent printing resumability) as compared with the prior art.
(4) Further, the inkjet ink according to the present embodiment may further contain sodium carbonate as a pH adjuster. With such a configuration, the ink is excellent in print quality (in particular, intermittent printing resumability), light resistance and moisture resistance not only when used for neutral tablets and acidic tablets but also, as compared with the prior art, when used for alkaline tablets.
(5) Further, the inkjet ink according to the present embodiment may be an inkjet ink for use in printing on an alkaline tablet at least the surface of which is alkaline. With such a configuration, the ink is excellent in moisture resistance as compared with the prior art.
(6) Further, the inkjet ink according to the present embodiment may be an inkjet ink for use in printing on a magnesium oxide tablet containing magnesium oxide at least on the surface. With such a configuration, the ink is excellent in moisture resistance as compared with the prior art.
(7) Further, in the inkjet ink according to the present embodiment, the content of the dye, with respect to the total mass of the inkjet ink for tablets, may be in a range of 0.5 mass% or more and 5.0 mass% or less, the content of the binder resin, with respect to the total mass of the inkjet ink for tablets, may be in a range of 1.0 mass% or more and 5.0 mass% or less, and the content of the anti-fading agent, with respect to the total mass of the inkjet ink for tablets, may be in a range of 1.0 mass% or more and 10.0 mass% or less. With such a configuration, the ink is excellent in print quality (in particular, intermittent printing resumability), light resistance and moisture resistance not only when used for neutral tablets and acidic tablets but also, as compared with the prior art, when used for alkaline tablets.
(8) Further, in the inkjet ink according to the present embodiment, the dye may be at least one selected from azo dyes, triphenylmethane dyes and xanthene dyes. With such a configuration, the ink is excellent in light resistance and visibility as compared with the prior art.
(9) Further, in the inkjet ink according to the present embodiment, the azo dye may be at least one of Food Red No. 102 and Food Yellow No. 4, the triphenylmethane dye may be Food Blue No. 1, and the xanthene dye may be Food Red No. 106. With such a configuration, the ink is excellent in light resistance and visibility as compared with the prior art.
(10) Further, the inkjet ink according to the present embodiment may contain an edible dye, reduced isomaltulose as an anti-fading agent, shellac as a binder resin, and water and ethanol as a solvent, wherein the content of the ethanol, with respect to the total mass of the inkjet ink for tablets, is in a range of 1.0 mass% or more and 10.0 mass% or less, the inkjet ink further contains sodium carbonate as a pH adjuster, and the inkjet ink as a whole is alkaline. With such a configuration, the ink is excellent in print quality (in particular, intermittent printing resumability), light resistance and moisture resistance not only when used for neutral tablets and acidic tablets but also, as compared with the prior art, when used for alkaline tablets.
(11) Further, the inkjet ink according to the present embodiment may be an inkjet ink for printing on a magnesium oxide tablet containing magnesium oxide in a range of 0.2 g or more and 0.5 g or less per tablet, the inkjet ink containing an edible dye, reduced isomaltulose as an anti-fading agent, shellac as a binder resin, and water and ethanol as a solvent, wherein the inkjet ink contains, as the dye, only Food Blue No. 1, or only Food Yellow No. 4 and Food Red No. 106; the content of the Food Blue No. 1, with respect to the total mass of the inkjet ink for tablets, is in a range of 0.5 mass% or more and 5.0 mass% or less; the content of the Food Yellow No. 4, with respect to the total mass of the inkjet ink for tablets, is in a range of 0.25 mass% or more and 2.0 mass% or less, and the content of the Food Red No. 106, with respect to the total mass of the inkjet ink for tablets, is in a range of 0.25 mass% or more and 3.0 mass% or less; the content of the reduced isomaltulose, with respect to the total mass of the inkjet ink for tablets, is in a range of 1.0 mass% or more and 10.0 mass% or less; the content of the shellac, with respect to the total mass of the inkjet ink for tablets, is in a range of 1.0 mass% or more and 5.0 mass% or less; the content of the ethanol, with respect to the total mass of the inkjet ink for tablets, is in a range of 1.0 mass% or more and 10.0 mass% or less; and the inkjet ink as a whole is alkaline. With such a configuration, the ink is excellent in print quality (in particular, intermittent printing resumability), light resistance and moisture resistance not only when used for neutral tablets and acidic tablets but also, as compared with the prior art, when used for alkaline tablets.
(12) Further, the inkjet ink according to the present embodiment may further contain sodium carbonate as a pH adjuster, wherein the content of the sodium carbonate, with respect to the total mass of the inkjet ink for tablets, is in a range of 0.1 mass% or more and 0.6 mass% or less. With such a configuration, the ink is excellent in print quality (in particular, intermittent printing resumability), light resistance and moisture resistance not only when used for neutral tablets and acidic tablets but also, as compared with the prior art, when used for alkaline tablets.
(13) Further, in the inkjet ink according to the present embodiment, the absolute value of the difference between the pH of the inkjet ink and the pH at the printing location of the tablet that is the printing object may be within 2. With such a configuration, the ink is excellent in print quality (in particular, intermittent printing resumability), light resistance and moisture resistance not only when used for neutral tablets and acidic tablets but also, as compared with the prior art, when used for alkaline tablets.
(14) The tablet (printed tablet) according to the present embodiment includes a printed image (an example of a printed portion) 3 printed with the inkjet ink described above. With such a configuration, not only when used for neutral tablets and acidic tablets but also when used for alkaline tablets, photo-discoloration and fading in the printed image 3 or the like printed directly on the surface of the tablet or the like can be sufficiently suppressed as compared with the prior art, and the light resistance of the printed image 3 can be sufficiently improved. Furthermore, edibility can also be imparted to the printed image portion printed on the surface of the tablet.
(15) The tablet (printed tablet) according to the present embodiment may be one in which a printed portion is printed and which contains magnesium oxide in a range of 0.2 g or more and 0.5 g or less per tablet. With such a configuration, not only when used for neutral tablets and acidic tablets but also when used for alkaline tablets, photo-discoloration and fading in the printed image 3 or the like printed directly on the surface of the tablet or the like can be sufficiently suppressed as compared with the prior art, and the light resistance of the printed image 3 can be sufficiently improved. Furthermore, edibility can also be imparted to the printed image portion printed on the surface of the tablet.

### Examples

Hereinafter, the present invention will be described in more detail by way of Examples, but the present invention is not limited in any way by the Examples. <Examples 1 to 29, Comparative Examples 1 to 16, and Reference Examples 1 to 3> Hereinafter, the procedure for preparing the inkjet inks in Examples 1 to 29, Comparative Examples 1 to 16, and Reference Examples 1 to 3 will be described. (Production of Inkjet Ink) First, a printing ink was prepared. The inkjet ink contains a colorant (food dye), a solvent, an anti-fading agent, a binder resin and a pH adjuster in the contents described below. As the order of preparation, first, the binder resin and the pH adjuster were added to the solvent, and the mixture was stirred for about 2 hours while being heated to about 60°C to obtain a mixed solvent, to which the anti-fading agent was added to obtain a transparent base liquid. Next, the colorant was added to the transparent base liquid. Thus, the ink according to the present Example was prepared. Hereinafter, the various components will be described specifically.

In the present Examples, purified water (ion-exchanged water), propylene glycol (PG) and ethanol were used as the solvent as necessary. Specifically, the binder resin and the pH adjuster were added to a solvent obtained by adding propylene glycol (PG) and ethanol to purified water, and the mixture was well stirred for about 2 hours while being heated to about 60°C to obtain a solvent (mixed solvent). The anti-fading agent was added to the above solvent as necessary, and the mixture was stirred for about 1 hour to obtain a transparent base liquid. To the transparent base liquid, Food Blue No. 1, Food Red No. 102, Food Red No. 106 and Food Yellow No. 4, which are food dyes, were added as the colorant as necessary to obtain the inkjet inks of Examples 1 to 29, Comparative Examples 1 to 16, and Reference Examples 1 to 3.

<Sample #1 (Comparative Example 1)> With respect to the total mass of the inkjet ink of Sample #1 (Comparative Example 1), the content of Food Blue No. 1, which is the colorant, was set to 1.5 mass%, the content of purified water in the solvent was set to 64.0 mass%, the content of ethanol was set to 6.5 mass%, and the content of propylene glycol (PG) was set to 28.0 mass%. The inkjet ink of Sample #1 (Comparative Example 1) contained none of a binder resin, a pH adjuster and an anti-fading agent. Thus, the inkjet ink of Sample #1 (Comparative Example 1) was obtained. Further, the inkjet ink of Sample #1 (Comparative Example 1) was printed on the surface of a tablet exhibiting acidity to obtain the tablet of Sample #1 (Comparative Example 1).

<Sample #2 (Comparative Example 2)> The inkjet ink of Sample #1 (Comparative Example 1) was printed on the surface of a tablet exhibiting neutrality to obtain the tablet of Sample #2 (Comparative Example 2).

<Sample #3 (Comparative Example 3)> The inkjet ink of Sample #1 (Comparative Example 1) was printed on the surface of a tablet exhibiting alkalinity to obtain the tablet of Sample #3 (Comparative Example 3).

<Sample #4 (Reference Example 1)> With respect to the total mass of the inkjet ink of Sample #4 (Reference Example 1), the content of Food Blue No. 1, which is the colorant, was set to 1.5 mass%, the content of purified water in the solvent was set to 54.0 mass%, the content of ethanol was set to 6.5 mass%, the content of propylene glycol (PG) was set to 28.0 mass%, and the content of reduced isomaltulose, which is the anti-fading agent, was set to 10.0 mass%. The inkjet ink of Sample #4 (Reference Example 1) contained neither a binder resin nor a pH adjuster. Thus, the inkjet ink of Sample #4 (Reference Example 1) was obtained. Further, the inkjet ink of Sample #4 (Reference Example 1) was printed on the surface of a tablet exhibiting acidity to obtain the tablet of Sample #4 (Reference Example 1).

<Sample #5 (Reference Example 2)> The inkjet ink of Sample #4 (Reference Example 1) was printed on the surface of a tablet exhibiting neutrality to obtain the tablet of Sample #5 (Reference Example 2).

<Sample #6 (Comparative Example 4)> The inkjet ink of Sample #4 (Reference Example 1) was printed on the surface of a tablet exhibiting alkalinity to obtain the tablet of Sample #6 (Comparative Example 4).

<Sample #7 (Example 1)> With respect to the total mass of the inkjet ink of Sample #7 (Example 1), the content of Food Blue No. 1, which is the colorant, was set to 1.5 mass%, the content of purified water in the solvent was set to 50.8 mass%, the content of ethanol was set to 6.5 mass%, the content of propylene glycol (PG) was set to 28.0 mass%, the content of shellac, which is the binder resin, was set to 3.0 mass%, the content of sodium carbonate, which is the pH adjuster, was set to 0.2 mass%, and the content of reduced isomaltulose, which is the anti-fading agent, was set to 10.0 mass%. Thus, the inkjet ink of Sample #7 (Example 1) was obtained. Further, the inkjet ink of Sample #7 (Example 1) was printed on the surface of a tablet exhibiting acidity to obtain the tablet of Sample #7 (Example 1).

<Sample #8 (Example 2)> The inkjet ink of Sample #7 (Example 1) was printed on the surface of a tablet exhibiting neutrality to obtain the tablet of Sample #8 (Example 2).

<Sample #9 (Example 3)> The inkjet ink of Sample #7 (Example 1) was printed on the surface of a tablet exhibiting alkalinity to obtain the tablet of Sample #9 (Example 3).

<Sample #10 (Comparative Example 5)> With respect to the total mass of the inkjet ink of Sample #10 (Comparative Example 5), the content of Food Blue No. 1, which is the colorant, was set to 1.5 mass%, the content of purified water in the solvent was set to 54.0 mass%, the content of ethanol was set to 6.5 mass%, the content of propylene glycol (PG) was set to 28.0 mass%, and the content of reduced isomaltulose, which is the anti-fading agent, was set to 10.0 mass%. The inkjet ink of Sample #10 (Comparative Example 5) contained neither a binder resin nor a pH adjuster. Thus, the inkjet ink of Sample #10 (Comparative Example 5) was obtained. Further, the inkjet ink of Sample #10 (Comparative Example 5) was printed on the surface of a tablet exhibiting alkalinity to obtain the tablet of Sample #10 (Comparative Example 5).

<Sample #11 (Comparative Example 6)> With respect to the total mass of the inkjet ink of Sample #11 (Comparative Example 6), the content of Food Blue No. 1, which is the colorant, was set to 1.5 mass%, the content of purified water in the solvent was set to 51.0 mass%, the content of ethanol was set to 6.5 mass%, the content of propylene glycol (PG) was set to 28.0 mass%, the content of polyethylene glycol 300 (polyethylene glycol having a mass-average molecular weight (Mw) of 300), which is the binder resin, was set to 3.0 mass%, and the content of reduced isomaltulose, which is the anti-fading agent, was set to 10.0 mass%. The inkjet ink of Sample #11 (Comparative Example 6) contained no pH adjuster. Thus, the inkjet ink of Sample #11 (Comparative Example 6) was obtained. Further, the inkjet ink of Sample #11 (Comparative Example 6) was printed on the surface of a tablet exhibiting alkalinity to obtain the tablet of Sample #11 (Comparative Example 6).

<Sample #12 (Comparative Example 7)> With respect to the total mass of the inkjet ink of Sample #12 (Comparative Example 7), the content of Food Blue No. 1, which is the colorant, was set to 1.5 mass%, the content of purified water in the solvent was set to 61.0 mass%, the content of ethanol was set to 6.5 mass%, the content of propylene glycol (PG) was set to 28.0 mass%, and the content of polyethylene glycol 400 (polyethylene glycol having a mass-average molecular weight (Mw) of 400), which is the binder resin, was set to 3.0 mass%. The inkjet ink of Sample #12 (Comparative Example 7) contained neither a pH adjuster nor an anti-fading agent. Thus, the inkjet ink of Sample #12 (Comparative Example 7) was obtained. Further, the inkjet ink of Sample #12 (Comparative Example 7) was printed on the surface of a tablet exhibiting alkalinity to obtain the tablet of Sample #12 (Comparative Example 7).

<Sample #13 (Comparative Example 8)> With respect to the total mass of the inkjet ink of Sample #13 (Comparative Example 8), the content of Food Blue No. 1, which is the colorant, was set to 1.5 mass%, the content of purified water in the solvent was set to 51.0 mass%, the content of ethanol was set to 6.5 mass%, the content of propylene glycol (PG) was set to 28.0 mass%, the content of polyethylene glycol 400 (polyethylene glycol having a mass-average molecular weight (Mw) of 400), which is the binder resin, was set to 3.0 mass%, and the content of reduced isomaltulose, which is the anti-fading agent, was set to 10.0 mass%. The inkjet ink of Sample #13 (Comparative Example 8) contained no pH adjuster. Thus, the inkjet ink of Sample #13 (Comparative Example 8) was obtained. Further, the inkjet ink of Sample #13 (Comparative Example 8) was printed on the surface of a tablet exhibiting alkalinity to obtain the tablet of Sample #13 (Comparative Example 8).

<Sample #14 (Comparative Example 9)> With respect to the total mass of the inkjet ink of Sample #14 (Comparative Example 9), the content of Food Blue No. 1, which is the colorant, was set to 1.5 mass%, the content of purified water in the solvent was set to 48.4 mass%, the content of ethanol was set to 6.5 mass%, the content of propylene glycol (PG) was set to 28.0 mass%, the content of polyethylene glycol 400 (polyethylene glycol having a mass-average molecular weight (Mw) of 400), which is the binder resin, was set to 5.6 mass%, and the content of reduced isomaltulose, which is the anti-fading agent, was set to 10.0 mass%. The inkjet ink of Sample #14 (Comparative Example 9) contained no pH adjuster. Thus, the inkjet ink of Sample #14 (Comparative Example 9) was obtained. Further, the inkjet ink of Sample #14 (Comparative Example 9) was printed on the surface of a tablet exhibiting alkalinity to obtain the tablet of Sample #14 (Comparative Example 9).

<Sample #15 (Comparative Example 10)> With respect to the total mass of the inkjet ink of Sample #15 (Comparative Example 10), the content of Food Blue No. 1, which is the colorant, was set to 1.5 mass%, the content of purified water in the solvent was set to 51.0 mass%, the content of ethanol was set to 6.5 mass%, the content of propylene glycol (PG) was set to 28.0 mass%, the content of polyethylene glycol 1540 (polyethylene glycol having a mass-average molecular weight (Mw) of 1540), which is the binder resin, was set to 3.0 mass%, and the content of reduced isomaltulose, which is the anti-fading agent, was set to 10.0 mass%. The inkjet ink of Sample #15 (Comparative Example 10) contained no pH adjuster. Thus, the inkjet ink of Sample #15 (Comparative Example 10) was obtained. Further, the inkjet ink of Sample #15 (Comparative Example 10) was printed on the surface of a tablet exhibiting alkalinity to obtain the tablet of Sample #15 (Comparative Example 10).

<Sample #16 (Example 4)> With respect to the total mass of the inkjet ink of Sample #16 (Example 4), the content of Food Blue No. 1, which is the colorant, was set to 1.5 mass%, the content of purified water in the solvent was set to 50.8 mass%, the content of ethanol was set to 6.5 mass%, the content of propylene glycol (PG) was set to 28.0 mass%, the content of shellac, which is the binder resin, was set to 3.0 mass%, the content of the pH adjuster was set to 0.2 mass%, and the content of reduced isomaltulose, which is the anti-fading agent, was set to 10.0 mass%. Thus, the inkjet ink of Sample #16 (Example 4) was obtained. Further, the inkjet ink of Sample #16 (Example 4) was printed on the surface of a tablet exhibiting alkalinity to obtain the tablet of Sample #16 (Example 4).

<Sample #17 (Comparative Example 11)> With respect to the total mass of the inkjet ink of Sample #17 (Comparative Example 11), the content of Food Blue No. 1, which is the colorant, was set to 1.5 mass%, the content of purified water in the solvent was set to 60.8 mass%, the content of ethanol was set to 6.5 mass%, the content of propylene glycol (PG) was set to 28.0 mass%, the content of shellac, which is the binder resin, was set to 3.0 mass%, and the content of sodium carbonate, which is the pH adjuster, was set to 0.2 mass%. The inkjet ink of Sample #17 (Comparative Example 11) contained no anti-fading agent. Thus, the inkjet ink of Sample #17 (Comparative Example 11) was obtained. Further, the inkjet ink of Sample #17 (Comparative Example 11) was printed on the surface of a tablet exhibiting alkalinity to obtain the tablet of Sample #17 (Comparative Example 11).

<Sample #18 (Example 5)> With respect to the total mass of the inkjet ink of Sample #18 (Example 5), the content of Food Blue No. 1, which is the colorant, was set to 1.5 mass%, the content of purified water in the solvent was set to 55.8 mass%, the content of ethanol was set to 6.5 mass%, the content of propylene glycol (PG) was set to 28.0 mass%, the content of shellac, which is the binder resin, was set to 3.0 mass%, the content of sodium carbonate, which is the pH adjuster, was set to 0.2 mass%, and the content of reduced isomaltulose, which is the anti-fading agent, was set to 5.0 mass%. Thus, the inkjet ink of Sample #18 (Example 5) was obtained. Further, the inkjet ink of Sample #18 (Example 5) was printed on the surface of a tablet exhibiting alkalinity to obtain the tablet of Sample #18 (Example 5).

<Sample #19 (Example 6)> With respect to the total mass of the inkjet ink of Sample #19 (Example 6), the content of Food Red No. 102, which is the colorant, was set to 1.5 mass%, the content of purified water in the solvent was set to 57.3 mass%, the content of ethanol was set to 6.5 mass%, the content of propylene glycol (PG) was set to 28.0 mass%, the content of shellac, which is the binder resin, was set to 3.0 mass%, the content of sodium carbonate, which is the pH adjuster, was set to 0.2 mass%, and the content of reduced isomaltulose, which is the anti-fading agent, was set to 5.0 mass%. Thus, the inkjet ink of Sample #19 (Example 6) was obtained. Further, the inkjet ink of Sample #19 (Example 6) was printed on the surface of a tablet exhibiting alkalinity to obtain the tablet of Sample #19 (Example 6).

<Sample #20 (Example 7)> With respect to the total mass of the inkjet ink of Sample #20 (Example 7), the content of Food Red No. 102, which is the colorant, was set to 1.5 mass%, the content of purified water in the solvent was set to 57.3 mass%, the content of ethanol was set to 6.5 mass%, the content of propylene glycol (PG) was set to 28.0 mass%, the content of shellac, which is the binder resin, was set to 3.0 mass%, the content of sodium carbonate, which is the pH adjuster, was set to 0.2 mass%, and the content of lactose, which is the anti-fading agent, was set to 5.0 mass%. Thus, the inkjet ink of Sample #20 (Example 7) was obtained. Further, the inkjet ink of Sample #20 (Example 7) was printed on the surface of a tablet exhibiting alkalinity to obtain the tablet of Sample #20 (Example 7).

<Sample #21 (Reference Example 3)> With respect to the total mass of the inkjet ink of Sample #21 (Reference Example 3), the content of Food Red No. 102, which is the colorant, was set to 1.5 mass%, the content of purified water in the solvent was set to 62.3 mass%, the content of ethanol was set to 6.5 mass%, the content of propylene glycol (PG) was set to 28.0 mass%, the content of shellac, which is the binder resin, was set to 3.0 mass%, and the content of sodium carbonate, which is the pH adjuster, was set to 0.2 mass%. The inkjet ink of Sample #21 (Reference Example 3) contained no anti-fading agent. Thus, the inkjet ink of Sample #21 (Reference Example 3) was obtained. Further, the inkjet ink of Sample #21 (Reference Example 3) was printed on the surface of a tablet exhibiting alkalinity to obtain the tablet of Sample #21 (Reference Example 3).

<Sample #22 (Comparative Example 12)> With respect to the total mass of the inkjet ink of Sample #22 (Comparative Example 12), the content of Food Blue No. 1, which is the colorant, was set to 1.0 mass%, the content of purified water in the solvent was set to 63.4 mass%, the content of ethanol was set to 6.5 mass%, the content of propylene glycol (PG) was set to 28.0 mass%, the content of shellac, which is the binder resin, was set to 1.0 mass%, and the content of sodium carbonate, which is the pH adjuster, was set to 0.1 mass%. The inkjet ink of Sample #22 (Comparative Example 12) contained no anti-fading agent. Thus, the inkjet ink of Sample #22 (Comparative Example 12) was obtained. Further, the inkjet ink of Sample #22 (Comparative Example 12) was printed on the surface of a tablet exhibiting alkalinity to obtain the tablet of Sample #22 (Comparative Example 12).

<Sample #23 (Example 8)> With respect to the total mass of the inkjet ink of Sample #23 (Example 8), the content of Food Blue No. 1, which is the colorant, was set to 1.0 mass%, the content of purified water in the solvent was set to 58.4 mass%, the content of ethanol was set to 6.5 mass%, the content of propylene glycol (PG) was set to 28.0 mass%, the content of shellac, which is the binder resin, was set to 1.0 mass%, the content of sodium carbonate, which is the pH adjuster, was set to 0.1 mass%, and the content of reduced isomaltulose, which is the anti-fading agent, was set to 5.0 mass%. Thus, the inkjet ink of Sample #23 (Example 8) was obtained. Further, the inkjet ink of Sample #23 (Example 8) was printed on the surface of a tablet exhibiting alkalinity to obtain the tablet of Sample #23 (Example 8).

<Sample #24 (Example 9)> With respect to the total mass of the inkjet ink of Sample #24 (Example 9), the content of Food Blue No. 1, which is the colorant, was set to 1.0 mass%, the content of purified water in the solvent was set to 53.4 mass%, the content of ethanol was set to 6.5 mass%, the content of propylene glycol (PG) was set to 28.0 mass%, the content of shellac, which is the binder resin, was set to 1.0 mass%, the content of sodium carbonate, which is the pH adjuster, was set to 0.1 mass%, and the content of reduced isomaltulose, which is the anti-fading agent, was set to 10.0 mass%. Thus, the inkjet ink of Sample #24 (Example 9) was obtained. Further, the inkjet ink of Sample #24 (Example 9) was printed on the surface of a tablet exhibiting alkalinity to obtain the tablet of Sample #24 (Example 9).

<Sample #25 (Comparative Example 13)> With respect to the total mass of the inkjet ink of Sample #25 (Comparative Example 13), the content of Food Blue No. 1, which is the colorant, was set to 1.0 mass%, the content of purified water in the solvent was set to 62.3 mass%, the content of ethanol was set to 6.5 mass%, the content of propylene glycol (PG) was set to 28.0 mass%, the content of shellac, which is the binder resin, was set to 2.0 mass%, and the content of sodium carbonate, which is the pH adjuster, was set to 0.2 mass%. The inkjet ink of Sample #25 (Comparative Example 13) contained no anti-fading agent. Thus, the inkjet ink of Sample #25 (Comparative Example 13) was obtained. Further, the inkjet ink of Sample #25 (Comparative Example 13) was printed on the surface of a tablet exhibiting alkalinity to obtain the tablet of Sample #25 (Comparative Example 13).

<Sample #26 (Example 10)> With respect to the total mass of the inkjet ink of Sample #26 (Example 10), the content of Food Blue No. 1, which is the colorant, was set to 1.0 mass%, the content of purified water in the solvent was set to 57.3 mass%, the content of ethanol was set to 6.5 mass%, the content of propylene glycol (PG) was set to 28.0 mass%, the content of shellac, which is the binder resin, was set to 2.0 mass%, the content of sodium carbonate, which is the pH adjuster, was set to 0.2 mass%, and the content of reduced isomaltulose, which is the anti-fading agent, was set to 5.0 mass%. Thus, the inkjet ink of Sample #26 (Example 10) was obtained. Further, the inkjet ink of Sample #26 (Example 10) was printed on the surface of a tablet exhibiting alkalinity to obtain the tablet of Sample #26 (Example 10).

<Sample #27 (Example 11)> With respect to the total mass of the inkjet ink of Sample #27 (Example 11), the content of Food Blue No. 1, which is the colorant, was set to 1.0 mass%, the content of purified water in the solvent was set to 47.3 mass%, the content of ethanol was set to 11.5 mass%, the content of propylene glycol (PG) was set to 28.0 mass%, the content of shellac, which is the binder resin, was set to 2.0 mass%, the content of sodium carbonate, which is the pH adjuster, was set to 0.2 mass%, and the content of reduced isomaltulose, which is the anti-fading agent, was set to 10.0 mass%. Thus, the inkjet ink of Sample #27 (Example 11) was obtained. Further, the inkjet ink of Sample #27 (Example 11) was printed on the surface of a tablet exhibiting alkalinity to obtain the tablet of Sample #27 (Example 11).

<Sample #28 (Comparative Example 14)> With respect to the total mass of the inkjet ink of Sample #28 (Comparative Example 14), the content of Food Blue No. 1, which is the colorant, was set to 1.0 mass%, the content of purified water in the solvent was set to 61.1 mass%, the content of ethanol was set to 6.5 mass%, the content of propylene glycol (PG) was set to 28.0 mass%, the content of shellac, which is the binder resin, was set to 3.0 mass%, and the content of sodium carbonate, which is the pH adjuster, was set to 0.4 mass%. The inkjet ink of Sample #28 (Comparative Example 14) contained no anti-fading agent. Thus, the inkjet ink of Sample #28 (Comparative Example 14) was obtained. Further, the inkjet ink of Sample #28 (Comparative Example 14) was printed on the surface of a tablet exhibiting alkalinity to obtain the tablet of Sample #28 (Comparative Example 14).

<Sample #29 (Example 12)> With respect to the total mass of the inkjet ink of Sample #29 (Example 12), the content of Food Blue No. 1, which is the colorant, was set to 1.0 mass%, the content of purified water in the solvent was set to 56.1 mass%, the content of ethanol was set to 6.5 mass%, the content of propylene glycol (PG) was set to 28.0 mass%, the content of shellac, which is the binder resin, was set to 3.0 mass%, the content of sodium carbonate, which is the pH adjuster, was set to 0.4 mass%, and the content of reduced isomaltulose, which is the anti-fading agent, was set to 5.0 mass%. Thus, the inkjet ink of Sample #29 (Example 12) was obtained. Further, the inkjet ink of Sample #29 (Example 12) was printed on the surface of a tablet exhibiting alkalinity to obtain the tablet of Sample #29 (Example 12).

<Sample #30 (Example 13)> With respect to the total mass of the inkjet ink of Sample #30 (Example 13), the content of Food Blue No. 1, which is the colorant, was set to 1.0 mass%, the content of purified water in the solvent was set to 46.1 mass%, the content of ethanol was set to 11.5 mass%, the content of propylene glycol (PG) was set to 28.0 mass%, the content of shellac, which is the binder resin, was set to 3.0 mass%, the content of sodium carbonate, which is the pH adjuster, was set to 0.4 mass%, and the content of reduced isomaltulose, which is the anti-fading agent, was set to 10.0 mass%. Thus, the inkjet ink of Sample #30 (Example 13) was obtained. Further, the inkjet ink of Sample #30 (Example 13) was printed on the surface of a tablet exhibiting alkalinity to obtain the tablet of Sample #30 (Example 13).

<Sample #31 (Comparative Example 15)> With respect to the total mass of the inkjet ink of Sample #31 (Comparative Example 15), the content of Food Blue No. 1, which is the colorant, was set to 1.0 mass%, the content of purified water in the solvent was set to 60.0 mass%, the content of ethanol was set to 6.5 mass%, the content of propylene glycol (PG) was set to 28.0 mass%, the content of shellac, which is the binder resin, was set to 4.0 mass%, and the content of sodium carbonate, which is the pH adjuster, was set to 0.5 mass%. The inkjet ink of Sample #31 (Comparative Example 15) contained no anti-fading agent. Thus, the inkjet ink of Sample #31 (Comparative Example 15) was obtained. Further, the inkjet ink of Sample #31 (Comparative Example 15) was printed on the surface of a tablet exhibiting alkalinity to obtain the tablet of Sample #31 (Comparative Example 15).

<Sample #32 (Example 14)> With respect to the total mass of the inkjet ink of Sample #32 (Example 14), the content of Food Blue No. 1, which is the colorant, was set to 1.0 mass%, the content of purified water in the solvent was set to 55.0 mass%, the content of ethanol was set to 6.5 mass%, the content of propylene glycol (PG) was set to 28.0 mass%, the content of shellac, which is the binder resin, was set to 4.0 mass%, the content of sodium carbonate, which is the pH adjuster, was set to 0.5 mass%, and the content of reduced isomaltulose, which is the anti-fading agent, was set to 5.0 mass%. Thus, the inkjet ink of Sample #32 (Example 14) was obtained. Further, the inkjet ink of Sample #32 (Example 14) was printed on the surface of a tablet exhibiting alkalinity to obtain the tablet of Sample #32 (Example 14).

<Sample #33 (Example 15)> With respect to the total mass of the inkjet ink of Sample #33 (Example 15), the content of Food Blue No. 1, which is the colorant, was set to 1.0 mass%, the content of purified water in the solvent was set to 50.0 mass%, the content of ethanol was set to 6.5 mass%, the content of propylene glycol (PG) was set to 28.0 mass%, the content of shellac, which is the binder resin, was set to 4.0 mass%, the content of sodium carbonate, which is the pH adjuster, was set to 0.5 mass%, and the content of reduced isomaltulose, which is the anti-fading agent, was set to 10.0 mass%. Thus, the inkjet ink of Sample #33 (Example 15) was obtained. Further, the inkjet ink of Sample #33 (Example 15) was printed on the surface of a tablet exhibiting alkalinity to obtain the tablet of Sample #33 (Example 15).

<Sample #34 (Comparative Example 16)> With respect to the total mass of the inkjet ink of Sample #34 (Comparative Example 16), the content of Food Blue No. 1, which is the colorant, was set to 1.0 mass%, the content of purified water in the solvent was set to 53.9 mass%, the content of ethanol was set to 11.5 mass%, the content of propylene glycol (PG) was set to 28.0 mass%, the content of shellac, which is the binder resin, was set to 5.0 mass%, and the content of sodium carbonate, which is the pH adjuster, was set to 0.6 mass%. The inkjet ink of Sample #34 (Comparative Example 16) contained no anti-fading agent. Thus, the inkjet ink of Sample #34 (Comparative Example 16) was obtained. Further, the inkjet ink of Sample #34 (Comparative Example 16) was printed on the surface of a tablet exhibiting alkalinity to obtain the tablet of Sample #34 (Comparative Example 16).

<Sample #35 (Example 16)> With respect to the total mass of the inkjet ink of Sample #35 (Example 16), the content of Food Blue No. 1, which is the colorant, was set to 1.0 mass%, the content of purified water in the solvent was set to 48.9 mass%, the content of ethanol was set to 11.5 mass%, the content of propylene glycol (PG) was set to 28.0 mass%, the content of shellac, which is the binder resin, was set to 5.0 mass%, the content of sodium carbonate, which is the pH adjuster, was set to 0.6 mass%, and the content of reduced isomaltulose, which is the anti-fading agent, was set to 5.0 mass%. Thus, the inkjet ink of Sample #35 (Example 16) was obtained. Further, the inkjet ink of Sample #35 (Example 16) was printed on the surface of a tablet exhibiting alkalinity to obtain the tablet of Sample #35 (Example 16).

<Sample #36 (Example 17)> With respect to the total mass of the inkjet ink of Sample #36 (Example 17), the content of Food Blue No. 1, which is the colorant, was set to 1.0 mass%, the content of purified water in the solvent was set to 43.9 mass%, the content of ethanol was set to 11.5 mass%, the content of propylene glycol (PG) was set to 28.0 mass%, the content of shellac, which is the binder resin, was set to 5.0 mass%, the content of sodium carbonate, which is the pH adjuster, was set to 0.6 mass%, and the content of reduced isomaltulose, which is the anti-fading agent, was set to 10.0 mass%. Thus, the inkjet ink of Sample #36 (Example 17) was obtained. Further, the inkjet ink of Sample #36 (Example 17) was printed on the surface of a tablet exhibiting alkalinity to obtain the tablet of Sample #36 (Example 17).

<Sample #37 (Example 18)> With respect to the total mass of the inkjet ink of Sample #37 (Example 18), the content of Food Blue No. 1, which is the colorant, was set to 0.5 mass%, the content of purified water in the solvent was set to 56.6 mass%, the content of ethanol was set to 6.5 mass%, the content of propylene glycol (PG) was set to 28.0 mass%, the content of shellac, which is the binder resin, was set to 3.0 mass%, the content of sodium carbonate, which is the pH adjuster, was set to 0.4 mass%, and the content of reduced isomaltulose, which is the anti-fading agent, was set to 5.0 mass%. Thus, the inkjet ink of Sample #37 (Example 18) was obtained. Further, the inkjet ink of Sample #37 (Example 18) was printed on the surface of a tablet exhibiting alkalinity to obtain the tablet of Sample #37 (Example 18).

<Sample #38 (Example 19)> With respect to the total mass of the inkjet ink of Sample #38 (Example 19), the content of Food Blue No. 1, which is the colorant, was set to 1.0 mass%, the content of purified water in the solvent was set to 56.1 mass%, the content of ethanol was set to 6.5 mass%, the content of propylene glycol (PG) was set to 28.0 mass%, the content of shellac, which is the binder resin, was set to 3.0 mass%, the content of sodium carbonate, which is the pH adjuster, was set to 0.4 mass%, and the content of reduced isomaltulose, which is the anti-fading agent, was set to 5.0 mass%. Thus, the inkjet ink of Sample #38 (Example 19) was obtained. Further, the inkjet ink of Sample #38 (Example 19) was printed on the surface of a tablet exhibiting alkalinity to obtain the tablet of Sample #38 (Example 19).

<Sample #39 (Example 20)> With respect to the total mass of the inkjet ink of Sample #39 (Example 20), the content of Food Blue No. 1, which is the colorant, was set to 3.0 mass%, the content of purified water in the solvent was set to 54.1 mass%, the content of ethanol was set to 6.5 mass%, the content of propylene glycol (PG) was set to 28.0 mass%, the content of shellac, which is the binder resin, was set to 3.0 mass%, the content of sodium carbonate, which is the pH adjuster, was set to 0.4 mass%, and the content of reduced isomaltulose, which is the anti-fading agent, was set to 5.0 mass%. Thus, the inkjet ink of Sample #39 (Example 20) was obtained. Further, the inkjet ink of Sample #39 (Example 20) was printed on the surface of a tablet exhibiting alkalinity to obtain the tablet of Sample #39 (Example 20).

<Sample #40 (Example 21)> With respect to the total mass of the inkjet ink of Sample #40 (Example 21), the content of Food Blue No. 1, which is the colorant, was set to 5.0 mass%, the content of purified water in the solvent was set to 52.1 mass%, the content of ethanol was set to 6.5 mass%, the content of propylene glycol (PG) was set to 28.0 mass%, the content of shellac, which is the binder resin, was set to 3.0 mass%, the content of sodium carbonate, which is the pH adjuster, was set to 0.4 mass%, and the content of reduced isomaltulose, which is the anti-fading agent, was set to 5.0 mass%. Thus, the inkjet ink of Sample #40 (Example 21) was obtained. Further, the inkjet ink of Sample #40 (Example 21) was printed on the surface of a tablet exhibiting alkalinity to obtain the tablet of Sample #40 (Example 21).

<Sample #41 (Example 22)> With respect to the total mass of the inkjet ink of Sample #41 (Example 22), the content of Food Red No. 102, which is the colorant, was set to 0.5 mass%, the content of purified water in the solvent was set to 56.6 mass%, the content of ethanol was set to 6.5 mass%, the content of propylene glycol (PG) was set to 28.0 mass%, the content of shellac, which is the binder resin, was set to 3.0 mass%, the content of sodium carbonate, which is the pH adjuster, was set to 0.4 mass%, and the content of reduced isomaltulose, which is the anti-fading agent, was set to 5.0 mass%. Thus, the inkjet ink of Sample #41 (Example 22) was obtained. Further, the inkjet ink of Sample #41 (Example 22) was printed on the surface of a tablet exhibiting alkalinity to obtain the tablet of Sample #41 (Example 22).

<Sample #42 (Example 23)> With respect to the total mass of the inkjet ink of Sample #42 (Example 23), the content of Food Red No. 102, which is the colorant, was set to 1.0 mass%, the content of purified water in the solvent was set to 56.1 mass%, the content of ethanol was set to 6.5 mass%, the content of propylene glycol (PG) was set to 28.0 mass%, the content of shellac, which is the binder resin, was set to 3.0 mass%, the content of sodium carbonate, which is the pH adjuster, was set to 0.4 mass%, and the content of reduced isomaltulose, which is the anti-fading agent, was set to 5.0 mass%. Thus, the inkjet ink of Sample #42 (Example 23) was obtained. Further, the inkjet ink of Sample #42 (Example 23) was printed on the surface of a tablet exhibiting alkalinity to obtain the tablet of Sample #42 (Example 23).

<Sample #43 (Example 24)> With respect to the total mass of the inkjet ink of Sample #43 (Example 24), the content of Food Red No. 102, which is the colorant, was set to 3.0 mass%, the content of purified water in the solvent was set to 49.1 mass%, the content of ethanol was set to 11.5 mass%, the content of propylene glycol (PG) was set to 28.0 mass%, the content of shellac, which is the binder resin, was set to 3.0 mass%, the content of sodium carbonate, which is the pH adjuster, was set to 0.4 mass%, and the content of reduced isomaltulose, which is the anti-fading agent, was set to 5.0 mass%. Thus, the inkjet ink of Sample #43 (Example 24) was obtained. Further, the inkjet ink of Sample #43 (Example 24) was printed on the surface of a tablet exhibiting alkalinity to obtain the tablet of Sample #43 (Example 24).

<Sample #44 (Example 25)> With respect to the total mass of the inkjet ink of Sample #44 (Example 25), the content of Food Red No. 102, which is the colorant, was set to 5.0 mass%, the content of purified water in the solvent was set to 47.1 mass%, the content of ethanol was set to 11.5 mass%, the content of propylene glycol (PG) was set to 28.0 mass%, the content of shellac, which is the binder resin, was set to 3.0 mass%, the content of sodium carbonate, which is the pH adjuster, was set to 0.4 mass%, and the content of reduced isomaltulose, which is the anti-fading agent, was set to 5.0 mass%. Thus, the inkjet ink of Sample #44 (Example 25) was obtained. Further, the inkjet ink of Sample #44 (Example 25) was printed on the surface of a tablet exhibiting alkalinity to obtain the tablet of Sample #44 (Example 25).

<Sample #45 (Example 26)> With respect to the total mass of the inkjet ink of Sample #45 (Example 26), the content of Food Red No. 106 in the colorant was set to 0.3 mass%, the content of Food Yellow No. 4 was set to 0.3 mass%, the content of purified water in the solvent was set to 51.6 mass%, the content of ethanol was set to 11.5 mass%, the content of propylene glycol (PG) was set to 28.0 mass%, the content of shellac, which is the binder resin, was set to 3.0 mass%, the content of sodium carbonate, which is the pH adjuster, was set to 0.4 mass%, and the content of reduced isomaltulose, which is the anti-fading agent, was set to 5.0 mass%. Thus, the inkjet ink of Sample #45 (Example 26) was obtained. Further, the inkjet ink of Sample #45 (Example 26) was printed on the surface of a tablet exhibiting alkalinity to obtain the tablet of Sample #45 (Example 26).

<Sample #46 (Example 27)> With respect to the total mass of the inkjet ink of Sample #46 (Example 27), the content of Food Red No. 106 in the colorant was set to 0.5 mass%, the content of Food Yellow No. 4 was set to 0.5 mass%, the content of purified water in the solvent was set to 51.1 mass%, the content of ethanol was set to 11.5 mass%, the content of propylene glycol (PG) was set to 28.0 mass%, the content of shellac, which is the binder resin, was set to 3.0 mass%, the content of sodium carbonate, which is the pH adjuster, was set to 0.4 mass%, and the content of reduced isomaltulose, which is the anti-fading agent, was set to 5.0 mass%. Thus, the inkjet ink of Sample #46 (Example 27) was obtained. Further, the inkjet ink of Sample #46 (Example 27) was printed on the surface of a tablet exhibiting alkalinity to obtain the tablet of Sample #46 (Example 27).

<Sample #47 (Example 28)> With respect to the total mass of the inkjet ink of Sample #47 (Example 28), the content of Food Red No. 106 in the colorant was set to 1.5 mass%, the content of Food Yellow No. 4 was set to 1.5 mass%, the content of purified water in the solvent was set to 49.1 mass%, the content of ethanol was set to 11.5 mass%, the content of propylene glycol (PG) was set to 28.0 mass%, the content of shellac, which is the binder resin, was set to 3.0 mass%, the content of sodium carbonate, which is the pH adjuster, was set to 0.4 mass%, and the content of reduced isomaltulose, which is the anti-fading agent, was set to 5.0 mass%. Thus, the inkjet ink of Sample #47 (Example 28) was obtained. Further, the inkjet ink of Sample #47 (Example 28) was printed on the surface of a tablet exhibiting alkalinity to obtain the tablet of Sample #47 (Example 28).

<Sample #48 (Example 29)> With respect to the total mass of the inkjet ink of Sample #48 (Example 29), the content of Food Red No. 106 in the colorant was set to 2.5 mass%, the content of Food Yellow No. 4 was set to 2.5 mass%, the content of purified water in the solvent was set to 47.1 mass%, the content of ethanol was set to 11.5 mass%, the content of propylene glycol (PG) was set to 28.0 mass%, the content of shellac, which is the binder resin, was set to 3.0 mass%, the content of sodium carbonate, which is the pH adjuster, was set to 0.4 mass%, and the content of reduced isomaltulose, which is the anti-fading agent, was set to 5.0 mass%. Thus, the inkjet ink of Sample #48 (Example 29) was obtained. Further, the inkjet ink of Sample #48 (Example 29) was printed on the surface of a tablet exhibiting alkalinity to obtain the tablet of Sample #48 (Example 29).

Hereinafter, the respective evaluation items carried out in the present Examples and the evaluation methods thereof will be described. (Print Stability: Initial Printability and Continuous Printability) As the inkjet head, a piezoelectric-ceramic-driven drop-on-demand type inkjet head having a printing resolution of 600 dpi in the main scanning direction and 600 dpi in the sub-scanning direction (the conveyance direction of a recording medium such as a tablet) and a total number of nozzles of 2,656 was used. Using the above inkjet head, a test pattern was printed immediately after nozzle maintenance was carried out. Then, from the printing state of the test pattern, the legibility of the printed image accompanying the occurrence of a non-ejection region was confirmed. The evaluation criteria are as follows. In this evaluation, "initial printability" is the printability immediately after the start of printing, and "continuous printability" is the printability 30 minutes after the start of printing. Good (○): the case where line dropout and bending is 5% or less of the whole; Fair (△): the case where line dropout and bending is 20% or less of the whole; Poor (×): the case where line dropout and bending exceeds 20% of the whole. When each evaluation of initial printability and continuous printability was "Good (○)" or "Fair (△)", there was no problem in use, and therefore it was regarded as a pass.

(Print Stability: Intermittent Ejection Recoverability) Using a piezoelectric-ceramic-driven drop-on-demand type inkjet head having a printing resolution of 600 dpi in the main scanning direction and 600 dpi in the sub-scanning direction (the conveyance direction of a recording medium such as a tablet) and a total number of nozzles of 1,280, after the head was left for a prescribed time (15 minutes to 60 minutes) without flushing, a test pattern was printed at a printing drop amount of 6 pl per drop, and it was confirmed that ejection was possible from all nozzles without any non-ejection amount. In Tables 1 to 4 below, as the evaluation result of the intermittent printability (intermittent printing resumability/ejection stability), the standing time during which ejection of the ink was possible was measured. The evaluation criteria are as follows. Good (○): 15 minutes or more and less than 30 minutes; Fair (△): 5 minutes or more and less than 15 minutes; Poor (×): less than 5 minutes. When the evaluation of the intermittent printing resumability (ejection stability) test was "Good (○)" or "Fair (△)", there was no problem in use, and therefore it was regarded as a pass.

(Light Resistance Performance) The printed tablets of the respective Examples and the respective Comparative Examples for which chromaticity and optical color density had been measured were irradiated with visible light at a cumulative illuminance of 1.2 million lux·hours under a 30% RH environment using a light stability test apparatus (Nagano Science LT-200A-14WC). The chromaticity and optical color density of the printed tablets irradiated with visible light were measured with a spectrophotometer, and the color difference ΔE (conforming to JIS Z 8781), which indicates the amount of change in chromaticity and optical color density before and after irradiation with visible light, was compared. As described above, with respect to the change in color before and after irradiation with visible light, the inventors derived that, if the color difference ΔE according to JIS Z 8781 is 20 or less (ΔE ≤ 20), photo-discoloration and fading is sufficiently suppressed and excellent light resistance is obtained. The inventors also derived that, if the color difference ΔE is 20 or less (ΔE ≤ 20), excellent legibility is also obtained. Accordingly, when ΔE ≤ 20, the inkjet ink was regarded as having excellent light resistance and legibility and was regarded as a pass in this evaluation. The evaluation criteria in the tables are as follows. Excellent (⊚): ΔE ≤ 10; Good (○): ΔE ≤ 15; Fair (△): ΔE ≤ 20; Poor (×): ΔE > 20.

(Moisture Resistance Performance) The printed tablets of the respective Examples, the respective Comparative Examples and the respective Reference Examples for which chromaticity and optical color density had been measured were left to stand for 4 hours in a constant-temperature and constant-humidity chamber (Yamato Scientific IG421) set to conditions of 40°C and 90% RH. The chromaticity and optical color density of the printed tablets after standing were measured with a spectrophotometer, and the color difference ΔE (conforming to JIS Z 8781), which indicates the amount of change in chromaticity and optical color density before and after standing under high-humidity conditions, was compared. As described above, with respect to the change in color upon standing under high-humidity conditions, the inventors derived that, if the color difference ΔE according to JIS Z 8781 is 15 or less (ΔE ≤ 15), bleeding is sufficiently suppressed and excellent moisture resistance is obtained. The inventors also derived that, if the color difference ΔE is 15 or less (ΔE ≤ 15), excellent legibility is also obtained. Accordingly, when ΔE ≤ 15, the inkjet ink was regarded as having excellent moisture resistance and legibility and was regarded as a pass in this evaluation. The evaluation criteria in the tables are as follows.
Excellent (⊚): ΔE ≤ 5;
Good (○): ΔE ≤ 10;
Fair (△): ΔE ≤ 15;
Poor (×): ΔE > 15.

(pH Value Measurement) The pH value of the ink of each Example, each Comparative Example and each Reference Example was measured using a pH meter employing the glass electrode method. At this time, the measurement temperature was 25°C. The obtained pH values are shown in the tables.

**Table 1**

| | | Comp. Ex. 1-3 | | | Ref. Ex. 1-2 | | Comp. Ex. 4 | Examples 1-3 | | |
|---|---|---|---|---|---|---|---|---|---|---|
| | | #1 | #2 | #3 | #4 | #5 | #6 | #7 | #8 | #9 |
| Formulation | Colorant: Food Blue No. 1 | 1.5% | 1.5% | 1.5% | 1.5% | 1.5% | 1.5% | 1.5% 50.8% | 1.5% | 1.5% 50.8% |
| | Solvent: Water | 64.096 | 64.096 | 64.096 | 54.0% | 54.0% | 54.0% | | 50.896 | |
| | Solvent: Ethanol | 6.5% | 6.5% | 6.5% | 6.5% | 6.5% | 6.5% | 6.5% | 6.5% | 6.5% |
| | Solvent: Propylene glycol | 28.0% | 28.0% | 28.0% | 28.0% | 28.0% | 28.0% | 28.0% | 28.0% | 28.0% |
| | Binder resin: Shellac | | | | | | | 3.0% | 3.0% | 3.0% |
| | pH adjuster: Sodium carbonate | | | | | | | 0.2% | 0.2% | 0.2% |
| | Anti-fading agent: Reduced isomaltulose | | | | 10.0% | 10.0% | 10.0% | 10.0% | 10.0% | 10.0% |
| Tablet | of tablet used | | Neutral | | Acidic | | Alkaline | | | |
| Printability | Type Initial printing | Acidic | ○ | Alkaline | | Neutral | ○ | Acidic ○ | Neutral | Alkaline ○ |
| | Continuous printing | ○ | ○ | ○ | ○ | ○ | ○ | ○ | ○ | ○ |
| | Intermittent printing resumability | ○ | ○ | ○ | △ | △ | △ | △ | △ | △ |
| Ink performance | Light resistance [30%RH. 1.200 klx·hr] | × | × | × | ⊚ | ○ | ○ | ⊚ | ○ | ○ |
| | Moisture resistance [40° C. 90%RH. 4h] | △ | △ | × | △ | △ | × | ○ | ⊚ | ○ |
| | pH [glass-electrode pH meter] | 6.6 | 6.6 | 6.6 | 6.0 | 6.0 | 6.0 | 7.6 | 7.6 | 7.6 |

**Table 2**

| | | Comp. Ex. 5-10 | | | | | | Ex. 4 | Comp. Ex. 11 | Examples 5-7 | | | Ref. Ex. 3 |
|---|---|---|---|---|---|---|---|---|---|---|---|---|---|
| | | #10 | #11 | #12 | #13 | #14 | #15 | #16 | #17 | #18 | #19 | #20 | #21 |
| | Colorant: Food Blue No. 1 | 1.5% | 1.5% | 1.5% | 1.5% | 1.5% | 1.5% | 1.5% | 1.5% | 1.5% | | | |
| | Colorant: Food Red No. 102 | | | | | | | | | | 1.5% | 1.5% | 1.5% |
| | Solvent: Water | 54.0% | 51.0% | 61.0% | 51.0% | 48.4% | 51.0% | 50.8% | 60.8% | 55.8% | 57.3% | 57.3% | 62.3% |
| | Solvent: Ethanol | 6.5% | 6.5% | 6.5% | 6.5% | 6.5% | 6.5% | 6.5% | 6.5% | 6.5% | 6.5% | 6.5% | 6.5% |
| | Solvent: Propylene glycol | 28.0% | 28.0% | 28.0% | 28.0% | 28.0% | 28.0% | 28.0% | 28.0% | 28.0% | 28.0% | 28.0% | 28.0% |
| | Binder resin: PEG 300 | | 3.0% | | | | | | | | | | |
| Formulation | Binder resin: PEG 400 | | | 3.0% | 3.0% | 5.6% | | | | | | | |
| | Binder resin: PEG 1540 | | | | | | 3.0% | | | | | | |
| | Binder resin: Shellac | | | | | | | 3.0% | 3.0% | 3.0% | 3.0% | 3.0% | 3.0% |
| | pH adjuster: Sodium carbonate | | | | | | | 0.2% | 0.2% | 0.2% | 0.2% | 0.2% | 0.2% |
| | Anti-fading agent: Reduced isomaltulose | 10.0% | 10.0% | | 10.0% | 10.0% | 10.0% | 10.0% | | 5.0% | 5.0% | | |
| | Anti-fading agent: Lactose | | | | | | | | | | | 5.0% | |
| Tablet | Type of tablet used | Alkaline | Alkaline | Alkaline | Alkaline | Alkaline | Alkaline | Alkaline | Alkaline | Alkaline | Alkaline | Alkaline | Alkaline |
| Printability | Initial printing | ○ | ○ | ○ | ○ | ○ | ○ | ○ | ○ | ○ | ○ | ○ | ○ |
| | Continuous printing | ○ | ○ | ○ | ○ | ○ | ○ | ○ | ○ | ○ | ○ | ○ | ○ |
| | Intermittent printing resumability | △ | △ | ○ | △ | △ | × | △ | ○ | ○ | ○ | ○ | ○ |
| Ink performance | Light resistance [30%RH. 1.200 klx·hr] | ○ | ○ | × | ○ | ○ | ○ | ○ | × | △ | ⊚ | ○ | ○ |
| | Moisture resistance [40° C. 90%RH. 4h] | × | x | × | × | × | △ | ○ | ○ | ○ | ○ | ○ | ○ |
| | oH [glass-electrode pH] meter] | 6.0 | 5.9 | 6.5 | 6.0 | 5.9 | 6.2 | 7.1 | 8.1 | 7.8 | 7.8 | 7.8 | 8.1 |

**Table 3**

| | | Comp. Ex. 12 | Examples 8-9 | | Comp. Ex. 13 | Examples 10-11 | | Comp. Ex. 14 | Examples 12-13 | |
|---|---|---|---|---|---|---|---|---|---|---|
| | | #22 | #23 | #24 | #25 | #26 | #27 | #28 | #29 | #30 |
| Formulation | Colorant: Food Blue No. 1 | 1.0% | 1.0% | 1.0% | 1.0% | 1.0% | 1.0% | 1.0% | 1.0% | 1.0% |
| | Solvent: Water | 63.4% | 58.4% | 53.4% | 62.3% | 57.3% | 47.3% | 61.1% | 56.1% | 46.1% |
| | Solvent: Ethanol | 6.5% | 6.5% | 6.5% | 6.5% | 6.5% | 11.5% | 6.5% | 6.5% | 11.5% |
| | Solvent: Propylene glycol | 28.0% | 28.0% | 28.0% | 28.0% | 28.0% | 28.0% | 28.0% | 28.0% | 28.0% |
| | Binder resin: Shellac | 1.0% | 1.0% | 1.0% | 2.0% | 2.0% | 2.0% | 3.0% | 3.0% | 3.0% |
| | pH adjuster: Sodium carbonate | 0.1% | 0.1% | 0.1% | 0.2% | 0.2% | 0.2% | 0.4% | 0.4% | 0.4% |
| | Anti-fading agent: Reduced isomaltulose | | 5.0% | 10.0% | | 5.0% | 10.0% | | 5.0% | 10.0% |
| Tablet | Type of tablet used | Alkaline | Alkaline | Alkaline | Alkaline | Alkaline | Alkaline | Alkaline | Alkaline | Alkaline |
| Printability | Initial printing | ○ | ○ | ○ | ○ | ○ | ○ | ○ | ○ | ○ |
| | Continuous printing | ○ | ○ | ○ | ○ | ○ | ○ | ○ | ○ | ○ |
| | Intermittent printing resumability | ○ | ○ | ○ | ○ | ○ | ○ | ○ | ○ | ○ |
| Ink performance | Light resistance [30%RH. 1.200 klx·hr] | × | ○ | ○ | × | ○ | ○ | × | ○ | ⊚ |
| | Moisture resistance [40° C. 90%RH. 4h] | Δ | △ | △ | ○ | ○ | ○ | ○ | ○ | ○ |
| | pH [glass-electrode pH meter] | 7.4 | 7.2 | 7.0 | 7.9 | 7.6 | 7.4 | 8.8 | 8.4 | 8.3 |

**Table 4**

| | | Comp. Ex. 15 | Examples 14-15 | | Comp. Ex. 16 | Examples 16-17 | |
|---|---|---|---|---|---|---|---|
| | | #31 | #32 | #33 | #34 | #35 | #36 |
| Formulation | Colorant: Food Blue No. 1 | 1.0% | 1.0% | 1.0% | 1.0% | 1.0% | 1.0% |
| | Solvent: Water | 60.0% | 55.0% | 50.0% | 53.9% | 48.9% | 43.9% |
| | Solvent: Ethanol | 6.5% | 6.5% | 6.5% | 11.5% | 11.5% | 11.5% |
| | Solvent: Propylene glycol | 28.0% | 28.0% | 28.0% | 28.0% | 28.0% | 28.0% |
| | Binder resin: Shellac | 4.0% | 4.0% | 4.0% | 5.0% | 5.0% | 5.0% |
| | pH adjuster: Sodium carbonate | 0.5% | 0.5% | 0.5% | 0.6% | 0.6% | 0.6% |
| | Anti-fading agent: Reduced isomaltulose | | 5.0% | 10.0% | | 5.0% | 10.0% |
| Tablet | Type of tablet used | Alkaline | Alkaline | Alkaline | Alkaline | Alkaline | Alkaline |
| Printability | Initial printing | ○ | ○ | ○ | ○ | ○ | ○ |
| | Continuous printing | ○ | ○ | ○ | ○ | ○ | ○ |
| | Intermittent printing resumability | ○ | ○ | △ | △ | △ | △ |
| Ink performance | Light resistance [30%RH. 1.200 klx·hr] | × | ○ | ○ | × | ○ | ○ |
| | Moisture resistance [40° C. 90%RH 4h] | ⊚ | ⊚ | ⊚ | ⊚ | ⊚ | ⊚ |
| | pH [glass-electrode pH meter] | 9.3 | 9.0 | 8.9 | 9.7 | 9.5 | 9.3 |

**Table 5**

| | | Examples 18-29 | | | | | | | | | | | |
|---|---|---|---|---|---|---|---|---|---|---|---|---|---|
| | | #37 | #38 | #39 | #40 | #41 | #42 | #43 | #44 | #45 | #46 | #47 | #48 |
| | olorant: Food Blue No. 1 | 0.5% | 1.0% | 3.0% | 5.0% | | | | | | | | |
| | olorant: Food Red No. 102 | | | | | 0.5% | 1.0% | 3.0% | 5.0% | | | | |
| | olorant: Food Red No. 106 | | | | | | | | | 0.3% | 0.5% | 1.5% | 2.5% |
| | Colorant: Food Yellow No. 4 | | | | | | | | | 0.3% | 0.5% | 1.5% | 2.5% |
| Formulation | Solvent: Water | 56.6% | 56.1% | 54.1% | 52.1% | 56.6% | 56.1% | 49.1% | 47.1% | 51.6% | 51.1% | 49.1% | 47.1% |
| | Solvent: Ethanol | 6.5% | 6.5% | 6.5% | 6.5% | 6.5% | 6.5% | 11.5% | 11.5% | 11.5% | 11.5% | 11.5% | 11.5% |
| | Solvent: Propylene glycol | 28.0% | 28.0% | 28.0% | 28.0% | 28.0% | 28.0% | 28.0% | 28.0% | 28.0% | 28.0% | 28.0% | 28.0% |
| | Binder resin: Shellac | 3.0% | 3.0% | 3.0% | 3.0% | 3.0% | 3.0% | 3.0% | 3.0% | 3.0% | 3.0% | 3.0% | 3.0% |
| | pH adjuster: Sodium carbonate | 0.4% | 0.4% | 0.4% | 0.4% | 0.4% | 0.4% | 0.4% | 0.4% | 0.4% | 0.4% | 0.4% | 0.4% |
| | Anti-fading agent: Reduced isomaltulose | 5.0% | 5.0% | 5.0% | 5.0% | 5.0% | 5.0% | 5.0% | 5.0% | 5.0% | 5.0% | 5.0% | 5.0% |
| Tablet | Type of tablet used | Alkaline | Alkaline | Alkaline | Alkaline | Alkaline | Alkaline | Alkaline | Alkaline | Alkaline | Alkaline | Alkaline | Alkaline |
| Printability | Initial printing | ○ | ○ | ○ | ○ | ○ | ○ | ○ | ○ | ○ | ○ | ○ | ○ |
| | Continuous printing | ○ | ○ | ○ | ○ | ○ | ○ | ○ | ○ | ○ | ○ | ○ | ○ |
| | Intermittent printing resumability | ○ | ○ | ○ | △ | ○ | ○ | ○ | △ | ○ | ○ | ○ | △ |
| Ink performance | Light resistance [30%RH. 1.200 klx·hr] | △ | ○ | ○ | ○ | ⊚ | ⊚ | ⊚ | △ | △ | ○ | ○ | ○ |
| | Moisture resistance [40° C. 90%RH. 4h] | ○ | ○ | ○ | ○ | ○ | ○ | ○ | ○ | ○ | ○ | ○ | ○ |
| | pH [glass-electrode pH meter] | **8.4** | 8.3 | 8.3 | 8.4 | 8.5 | 8.5 | 8.3 | 8.4 | 8.4 | 8.4 | 8.3 | 8.5 |

As shown in Tables 1 to 5, with each of the inkjet inks of Samples #7 to #9, #16, #18 to #20, #23 to #24, #26 to #27, #29 to #30, #32 to #33, and #35 to #48, which correspond to Examples 1 to 29, the respective items of initial printability, continuous printability and intermittent printing resumability satisfied the pass criteria in the present Examples. Therefore, each of the inkjet inks of Samples #7 to #9, #16, #18 to #20, #23 to #24, #26 to #27, #29 to #30, #32 to #33, and #35 to #48, which correspond to Examples 1 to 29, is excellent in print quality (in particular, intermittent printing resumability) not only when used for neutral tablets and acidic tablets but also when used for alkaline tablets.

Further, as shown in Tables 1 to 5, with each of the inkjet inks of Samples #7 to #9, #16, #18 to #20, #23 to #24, #26 to #27, #29 to #30, #32 to #33, and #35 to #48, which correspond to Examples 1 to 29, the light resistance performance satisfied the pass criteria in the present Examples. Therefore, each of the inkjet inks of Samples #7 to #9, #16, #18 to #20, #23 to #24, #26 to #27, #29 to #30, #32 to #33, and #35 to #48, which correspond to Examples 1 to 29, is excellent in light resistance performance not only when used for neutral tablets and acidic tablets but also when used for alkaline tablets.

Further, as shown in Tables 1 to 5, with each of the inkjet inks of Samples #7 to #9, #16, #18 to #20, #23 to #24, #26 to #27, #29 to #30, #32 to #33, and #35 to #48, which correspond to Examples 1 to 29, the moisture resistance performance satisfied the pass criteria in the present Examples. Therefore, each of the inkjet inks of Samples #7 to #9, #16, #18 to #20, #23 to #24, #26 to #27, #29 to #30, #32 to #33, and #35 to #48, which correspond to Examples 1 to 29, is excellent in moisture resistance performance not only when used for neutral tablets and acidic tablets but also when used for alkaline tablets.

As shown in Reference Examples 1 to 2, even an inkjet ink that does not contain shellac as a binder resin is excellent in print quality (in particular, intermittent printing resumability), light resistance and moisture resistance when used for neutral tablets and acidic tablets. Further, since Food Red No. 102 itself has high light resistance, as shown in Reference Example 3, even an inkjet ink that does not contain an anti-fading agent (for example, reduced isomaltulose) is excellent in print quality (in particular, intermittent printing resumability), light resistance and moisture resistance not only when used for neutral tablets and acidic tablets but also when used for alkaline tablets.

As described above, the inkjet ink of the present Examples, which contains an edible dye, an anti-fading agent, a binder resin, and water and ethanol as a solvent and in which the binder resin is shellac, is excellent in print quality (in particular, intermittent printing resumability), light resistance and moisture resistance not only when used for neutral tablets and acidic tablets but also when used for alkaline tablets.

The scope of the present disclosure is not limited to the illustrated and described exemplary embodiments, but also includes all embodiments that bring about effects equivalent to those intended by the present disclosure. Furthermore, the scope of the present disclosure is not limited to the combinations of features of the disclosure defined by the claims, but can be defined by any desired combination of particular features among all the respective disclosed features.

Further, for example, the present disclosure can also take the following configurations.
(1) An inkjet ink for tablets, comprising an edible dye, an anti-fading agent, a binder resin, and water and ethanol as a solvent, wherein the binder resin is shellac.
(2) The inkjet ink for tablets according to (1) above, comprising reduced isomaltulose as the anti-fading agent.
(3) The inkjet ink for tablets according to (1) or (2) above, comprising lactose as the anti-fading agent.
(4) The inkjet ink for tablets according to any one of (1) to (3) above, wherein the content of the anti-fading agent, with respect to the total mass of the inkjet ink for tablets, is in a range of 1.0 mass% or more and 10.0 mass% or less.
(5) The inkjet ink for tablets according to any one of (1) to (4) above, wherein the content of the anti-fading agent, with respect to the total mass of the inkjet ink for tablets, is in a range of 3.0 mass% or more and 8.0 mass% or less.
(6) The inkjet ink for tablets according to any one of (1) to (5) above, wherein the content of the anti-fading agent, with respect to the total mass of the inkjet ink for tablets, is in a range of 5.0 mass% or more and 7.0 mass% or less.
(7) The inkjet ink for tablets according to any one of (1) to (6) above, wherein the content of the ethanol, with respect to the total mass of the inkjet ink for tablets, is in a range of 1.0 mass% or more and 10.0 mass% or less.
(8) The inkjet ink for tablets according to any one of (1) to (7) above, wherein the content of the ethanol, with respect to the total mass of the inkjet ink for tablets, is in a range of 2.5 mass% or more and 8.0 mass% or less.
(9) The inkjet ink for tablets according to any one of (1) to (8) above, wherein the content of the ethanol, with respect to the total mass of the inkjet ink for tablets, is in a range of 4.0 mass% or more and 7.0 mass% or less.
(10) The inkjet ink for tablets according to any one of (1) to (9) above, wherein the content of the binder, with respect to the total mass of the inkjet ink for tablets, is in a range of 1.0 mass% or more and 5.0 mass% or less.
(11) The inkjet ink for tablets according to any one of (1) to (10) above, wherein the content of the binder, with respect to the total mass of the inkjet ink for tablets, is in a range of 2.0 mass% or more and 4.0 mass% or less.
(12) The inkjet ink for tablets according to any one of (1) to (11) above, wherein the content of the dye, with respect to the total mass of the inkjet ink for tablets, is 0.5 mass% or more and 5.0 mass% or less.
(13) The inkjet ink for tablets according to any one of (1) to (12) above, wherein the content of the dye, with respect to the total mass of the inkjet ink for tablets, is 0.8 mass% or more and 4.0 mass% or less.
(14) The inkjet ink for tablets according to any one of (1) to (12) above, wherein the content of the dye, with respect to the total mass of the inkjet ink for tablets, is 1.0 mass% or more and 3.0 mass% or less.
(15) The inkjet ink for tablets according to any one of (1) to (14) above, further comprising sodium carbonate as a pH adjuster.
(16) The inkjet ink for tablets according to (15) above, wherein the content of the pH adjuster, with respect to the total mass of the inkjet ink for tablets, is in a range of 0.1 mass% or more and 0.6 mass% or less.
(17) The inkjet ink for tablets according to (15) or (16) above, wherein the content of the pH adjuster, with respect to the total mass of the inkjet ink for tablets, is in a range of 0.2 mass% or more and 0.5 mass% or less.
(18) The inkjet ink for tablets according to any one of (15) to (17) above, wherein the content of the pH adjuster, with respect to the total mass of the inkjet ink for tablets, is in a range of 0.3 mass% or more and 0.4 mass% or less.
(19) The inkjet ink for tablets according to any one of (1) to (18) above, further comprising propylene glycol as the solvent.
(20) The inkjet ink for tablets according to (19) above, wherein the content of the propylene glycol, with respect to the total mass of the inkjet ink for tablets, is in a range of 28.0 mass% or less.
(21) The inkjet ink for tablets according to (19) or (20) above, wherein the content of the propylene glycol is larger than the content of the ethanol.
(22) The inkjet ink for tablets according to any one of (1) to (21) above, wherein the pH value of the inkjet ink for tablets is in a range of 7.5 or more and 9.5 or less.
(23) The inkjet ink for tablets according to any one of (1) to (22) above, wherein the pH value of the inkjet ink for tablets is in a range of 8.0 or more and 9.0 or less.
(24) The inkjet ink for tablets according to any one of (1) to (23) above, wherein the pH value of the inkjet ink for tablets is in a range of 8.3 or more and 8.8 or less.
(25) The inkjet ink for tablets according to any one of (1) to (24) above, for use in printing on an alkaline tablet at least the surface of which is alkaline.
(26) The inkjet ink for tablets according to any one of (1) to (24) above, for use in printing on a magnesium oxide tablet containing magnesium oxide at least on the surface.
(27) The inkjet ink for tablets according to any one of (1) to (26) above, wherein the content of the dye, with respect to the total mass of the inkjet ink for tablets, is in a range of 0.5 mass% or more and 5.0 mass% or less, the content of the binder resin, with respect to the total mass of the inkjet ink for tablets, is in a range of 1.0 mass% or more and 5.0 mass% or less, and the content of the anti-fading agent, with respect to the total mass of the inkjet ink for tablets, is in a range of 1.0 mass% or more and 10.0 mass% or less.
(28) The inkjet ink for tablets according to any one of (1) to (27) above, wherein the dye is at least one selected from azo dyes, triphenylmethane dyes and xanthene dyes.
(29) The inkjet ink for tablets according to (28) above, wherein the azo dye is at least one of Food Red No. 102 and Food Yellow No. 4, the triphenylmethane dye is Food Blue No. 1, and the xanthene dye is Food Red No. 106.
(30) An inkjet ink for tablets, comprising an edible dye, reduced isomaltulose as an anti-fading agent, shellac as a binder resin, and water and ethanol as a solvent, wherein the content of the ethanol, with respect to the total mass of the inkjet ink for tablets, is in a range of 1.0 mass% or more and 10.0 mass% or less, the inkjet ink for tablets further comprises sodium carbonate as a pH adjuster, and the inkjet ink for tablets as a whole is alkaline.
(31) An inkjet ink for tablets for printing on a magnesium oxide tablet containing magnesium oxide in a range of 0.2 g or more and 0.5 g or less per tablet, comprising an edible dye, reduced isomaltulose as an anti-fading agent, shellac as a binder resin, and water and ethanol as a solvent, wherein the inkjet ink for tablets contains, as the dye, only Food Blue No. 1, or only Food Yellow No. 4 and Food Red No. 106; the content of the Food Blue No. 1, with respect to the total mass of the inkjet ink for tablets, is in a range of 0.5 mass% or more and 5.0 mass% or less; the content of the Food Yellow No. 4, with respect to the total mass of the inkjet ink for tablets, is in a range of 0.25 mass% or more and 2.0 mass% or less, and the content of the Food Red No. 106, with respect to the total mass of the inkjet ink for tablets, is in a range of 0.25 mass% or more and 3.0 mass% or less; the content of the reduced isomaltulose, with respect to the total mass of the inkjet ink for tablets, is in a range of 1.0 mass% or more and 10.0 mass% or less; the content of the shellac, with respect to the total mass of the inkjet ink for tablets, is in a range of 1.0 mass% or more and 5.0 mass% or less; the content of the ethanol, with respect to the total mass of the inkjet ink for tablets, is in a range of 1.0 mass% or more and 10.0 mass% or less; and the inkjet ink for tablets as a whole is alkaline.
(32) The inkjet ink for tablets according to any one of (1) to (31) above, further comprising sodium carbonate as a pH adjuster, wherein the content of the sodium carbonate, with respect to the total mass of the inkjet ink for tablets, is in a range of 0.1 mass% or more and 0.6 mass% or less.
(33) The inkjet ink for tablets according to any one of (1) to (32) above, wherein the absolute value of the difference between the pH of the inkjet ink for tablets and the pH at the printing location of the tablet that is the printing object is within 2.
(34) A printed tablet comprising a printed portion printed using the inkjet ink for tablets according to any one of (1) to (33) above.
(35) The printed tablet according to (34) above, wherein the tablet on which the printed portion is printed contains magnesium oxide in a range of 0.2 g or more and 0.5 g or less per tablet.
(36) Use of the inkjet ink for tablets according to any one of (1) to (31) above for printing on an alkaline tablet at least the surface of which is alkaline.
(37) Use of the inkjet ink for tablets according to any one of (1) to (31) above for printing on a magnesium oxide tablet containing magnesium oxide at least on the surface.

### Reference Signs List

1 base material of tablet
3 printed image
5 uncoated printed tablet
7 film-coat layer
9 film-coated printed tablet
10 dry coating film
11 uncoated tablet printed image (solid image)
13 film-coated tablet printed image (two-dimensional barcode)

## Claims

1. An inkjet ink for tablets, comprising:
an edible dye;
an anti-fading agent;
a binder resin; and
water and ethanol as a solvent,
wherein the binder resin is shellac.

2. The inkjet ink for tablets according to claim 1, comprising reduced isomaltulose as the anti-fading agent.

3. The inkjet ink for tablets according to claim 1, wherein the content of the ethanol, with respect to the total mass of the inkjet ink for tablets, is in a range of 1.0 mass% or more and 10.0 mass% or less.

4. The inkjet ink for tablets according to claim 3, further comprising sodium carbonate as a pH adjuster.

5. The inkjet ink for tablets according to claim 1, for use in printing on an alkaline tablet at least the surface of which is alkaline.

6. The inkjet ink for tablets according to claim 1, for use in printing on a magnesium oxide tablet containing magnesium oxide at least on the surface.

7. The inkjet ink for tablets according to claim 5, wherein the content of the dye, with respect to the total mass of the inkjet ink for tablets, is in a range of 0.5 mass% or more and 5.0 mass% or less, the content of the binder resin, with respect to the total mass of the inkjet ink for tablets, is in a range of 1.0 mass% or more and 5.0 mass% or less, and the content of the anti-fading agent, with respect to the total mass of the inkjet ink for tablets, is in a range of 1.0 mass% or more and 10.0 mass% or less.

8. The inkjet ink for tablets according to claim 5, wherein the dye is at least one selected from azo dyes, triphenylmethane dyes and xanthene dyes.

9. The inkjet ink for tablets according to claim 8, wherein the azo dye is at least one of Food Red No. 102 and Food Yellow No. 4, the triphenylmethane dye is Food Blue No. 1, and the xanthene dye is Food Red No. 106.

10. An inkjet ink for tablets, comprising an edible dye, reduced isomaltulose as an anti-fading agent, shellac as a binder resin, and water and ethanol as a solvent,
wherein the content of the ethanol, with respect to the total mass of the inkjet ink for tablets, is in a range of 1.0 mass% or more and 10.0 mass% or less, the inkjet ink for tablets further comprises sodium carbonate as a pH adjuster, and the inkjet ink for tablets as a whole is alkaline.

11. An inkjet ink for tablets for printing on a magnesium oxide tablet containing magnesium oxide in a range of 0.2 g or more and 0.5 g or less per tablet, the inkjet ink for tablets comprising an edible dye, reduced isomaltulose as an anti-fading agent, shellac as a binder resin, and water and ethanol as a solvent,
wherein the inkjet ink for tablets contains, as the dye, only Food Blue No. 1, or only Food Yellow No. 4 and Food Red No. 106;
the content of the Food Blue No. 1, with respect to the total mass of the inkjet ink for tablets, is in a range of 0.5 mass% or more and 5.0 mass% or less;
the content of the Food Yellow No. 4, with respect to the total mass of the inkjet ink for tablets, is in a range of 0.25 mass% or more and 2.0 mass% or less, and the content of the Food Red No. 106, with respect to the total mass of the inkjet ink for tablets, is in a range of 0.25 mass% or more and 3.0 mass% or less;
the content of the reduced isomaltulose, with respect to the total mass of the inkjet ink for tablets, is in a range of 1.0 mass% or more and 10.0 mass% or less;
the content of the shellac, with respect to the total mass of the inkjet ink for tablets, is in a range of 1.0 mass% or more and 5.0 mass% or less;
the content of the ethanol, with respect to the total mass of the inkjet ink for tablets, is in a range of 1.0 mass% or more and 10.0 mass% or less; and
the inkjet ink for tablets as a whole is alkaline.

12. The inkjet ink for tablets according to claim 11, further comprising sodium carbonate as a pH adjuster, wherein the content of the sodium carbonate, with respect to the total mass of the inkjet ink for tablets, is in a range of 0.1 mass% or more and 0.6 mass% or less.

13. The inkjet ink for tablets according to any one of claims 1 to 12, wherein the absolute value of the difference between the pH of the inkjet ink for tablets and the pH at the printing location of the tablet that is the printing object is within 2.

14. A printed tablet comprising a printed portion printed using the inkjet ink for tablets according to any one of claims 1 to 12.

15. The printed tablet according to claim 14, wherein the tablet on which the printed portion is printed contains magnesium oxide in a range of 0.2 g or more and 0.5 g or less per tablet.
